# EUROPEAN PATENT SPECIFICATION

(11) **EP 3 758 452 B1**
(45) Date of publication and mention of the grant of the patent: **21.09.2022**
(21) Application number: 19213723.0
(22) Date of filing: 05.12.2019
(51) Int. Cl.: H05B 47/19

(54) **SELF-ADAPTIVE LIGHTING CONTROL**
SELBSTADAPTIVE BELEUCHTUNGSSTEUERUNG
COMMANDE D'ÉCLAIRAGE AUTO-ADAPTATIVE

(30) Priority: 26.06.2019 EP 19182573
(43) Date of publication of application: 30.12.2020
(73) Proprietor: Helvar Oy Ab, 02150 Espoo (FI)
(72) Inventor: AHOLA, Jukka, 02150 ESPOO (FI); JUSLÉN, Henri, 02150 ESPOO (FI); SEPPONEN, Laura, 02150 ESPOO (FI); VESTERINEN, Matti, 02150 ESPOO (FI)
(74) Representative: Berggren Oy

(56) References cited:
- EP-A1- 2 919 562
- US-B1- 10 021 771

## Description

### TECHNICAL FIELD

The example and non-limiting embodiments of the present invention relate to operation of a luminaire in a lighting network or a lighting arrangement.

### BACKGROUND

In many scenarios, a luminaire is controlled at least partially based on the presence of one or more persons in the space illuminated by the luminaire such that the lights are switched (and/or kept) on while presence of one or more persons in the space is detected and switched (and/or kept) off while no persons are detected in the space. In a typical solution in this regard, a control entity receives respective sensor signals from one or more passive infrared (PIR) sensors, determines occupancy or non-occupancy accordingly, and switches/keeps the lights on (at a normal light output level) in response to occupancy and switches/keeps the lights off (or at another low light output level) in response to non-occupancy.

Modern lighting control typically may further employ sensors of other type as further basis for the lighting control. As an example in this regard, the control entity in a luminaire receives respective sensor signals from one or more light sensors that are arranged in the space illuminated by the luminaire and adjusts the light output level of the luminaire at least partially based on observed light level indicated in the respective sensor signals.

Sensor signals such as ones conveying the occupancy information and/or the light level information provide valuable control information that, on one hand, enables adjusting the light output of the luminaire such that sufficient light level is provided in the space in view of current occupancy of the space, while on the other hand enables energy conservation via reducing the light output of the luminaire when no occupancy in the space is detected and/or when the light level is sufficient even without substantial light output from the luminaire.

A traditional solution for lighting control that at least partially relies on the sensor information involves usage of a control entity provided with preprogrammed control logic or control algorithm that in the course of its operation reacts e.g. to respective sensor signals from a presence sensor and/or a light sensor in a predetermined manner, which is typically defined e.g. via manual configuration carried out upon installation of the control entity and/or the luminaire. This enables a control entity to adjust the light output of the luminaire it serves to control such that expected requirements and/or characteristics of lighting in the space the luminaire serves to illuminate are accounted for to some extent, while quite naturally such preprogrammed control logic is unable to account for actually encountered characteristics of the space in the course of operation of the luminaire. Moreover, in many installations the overall lighting arrangement may involve a high number of luminaires that each involve a respective control entity that serves to control the respective luminaire. Hence, the number of luminaires and/or the physical locations in which the luminaires and their control entities are installed may make their manual configuration inconvenient or even (practically) impossible, thereby increasing the risk of misconfiguration and, consequently, compromised lighting performance e.g. in terms of insufficient light level and/or excessive energy consumption.

In a more advanced solution, the control entity of a luminaire is able to automatically or autonomously adapt its preprogrammed control logic based on information obtained from its operating environment e.g. information received from other luminaires in its proximity via a wireless communication link and/or a wireless communication network. As an example, a wireless mesh network may be applied for wirelessly connecting luminaires of the lighting arrangement to each other in a flexible manner. The wireless communication capability of a luminaire may be applied, for example, to transmit information pertaining to its own operation to other luminaires of the lighting arrangement and, conversely, receive such information from other luminaires of the lighting arrangement. Such information may be referred to as (luminaire) status information and it may involve, for example, sensor information captured by a luminaire (e.g. an occupancy/non-occupancy indication based on a PIR sensor signal, a light level indication based on a light sensor signal) and/or operational information pertaining to actions (e.g. an indication of the luminaire switching its light output on or off or an indication of a light intensity level assumed by the luminaire) carried out by a luminaire.

Consequently, a first luminaire of the lighting arrangement may, in the course of its operation, learn patterns or sequences in the status information received from other luminaries that typically precede the first luminaire taking a certain lighting control action in response to a local triggering condition (e.g. switching the lights on or off in response to a respective change in the sensor signal received from a local presence sensor) and, consequently, the first luminaire may adapt or reprogram its preprogrammed control logic into one that (also) responds to detecting such pattern or sequence by taking the certain action or initiating a suitable preparatory action, thereby enabling the certain action already before detecting the local triggering condition. Examples of such a self-adjustment operation of a luminaire are disclosed in the European patent publications no. 2919562 and no. 3171674.

As a concrete example in this regard, we may consider a first luminaire and a second luminaire installed in proximity of each other e.g. in a corridor, in a room, an open office, etc. In such a setting, the control entity of the first luminaire may learn that reception of information indicating that the second luminaire has switched the light on (e.g. due to the local presence sensor of the second luminaire having indicated occupancy after a period of non-occupancy) is frequently followed by the presence sensor of the first luminaire changing its state from non-occupancy to occupancy and, consequently, the first luminaire switching the light on. After having learned such a chain of events, the first luminaire may adapt its operation such that it switches the light on already in response to receiving an indication of the second luminaire having switched the light on, thereby (possibly) switching the light on already before the presence sensor of the first luminaire detects occupancy.

While self-adaptation of the above-described kind enables a well-working approach for a luminaire to autonomously adjust its operation according to characteristics of its operating environment and, in particular, changes thereof independently of any central control (or lack thereof), continuous development of lighting solutions results in increased versatility of lighting control options and, consequently, even more sophisticated autonomous or partially autonomous self-adjustment techniques for lighting control are considered advantageous.

In related art, EP 2919562 A1 discloses a technique for controlling a luminaire using control means preprogrammed to cause the luminaire to carry out a predefined action as a response to an occurrence of a predefined triggering condition. The disclosed technique comprises storing, into a memory, status indications received in status indication messages from the other devices, analyzing the stored status indications in an attempt to identify a sequence of one or more status indications that repeatedly precede an occurrence of said predefined triggering condition, and reprogramming, in response to identifying a sequence of status indications that repeatedly precede an occurrence of said predefined triggering condition, the control means to cause the luminaire to initiate or to carry out a preparatory action for carrying out said predefined action as a response to reception of said identified sequence of status indications.

### SUMMARY

It is an object of the present invention to provide a technique that facilitates a control device serving to control light output from a luminaire automatically and autonomously adapting or reprogramming its preprogrammed operation in response to information obtained from its operating environment.

According to an example embodiment, a lighting control device for controlling light output from a luminaire is provided, where said controlling is based at least on an occupancy sensor signal that is indicative of a current occupancy status in a space illuminated by the luminaire and on a light sensor signal that is indicative of currently observed light level in said space, the lighting control device comprising a control means for controlling light output from the luminaire in accordance with a lighting control logic comprising at least a first lighting control rule that defines switching on the light output from the luminaire in accordance with a first switch-on profile as a response to an occurrence of a first triggering condition that involves the occupancy sensor signal indicating a change from non-occupancy to occupancy; a communication means for wireless communication with other lighting control devices that serve to control other luminaires, the communication means arranged to receive status indications from the other lighting control devices; and an adaptation means for adjusting the lighting control logic during operation of the lighting control device, wherein the adaptation means is arranged to: store, into a memory, a history of status indications received from one or more other lighting control devices and a history of light level indications derived based on the light sensor signal, analyze the stored status indications and light level indications in an attempt to identify a repeatedly occurring pattern that involves an increase in observed light level that meets one or more predefined criteria and reception of a status indication that indicates switching on the light output from a particular other luminaire taking place within a first predefined time window, and reprogram, in response to identifying said repeatedly occurring pattern, the lighting control logic by introducing a second lighting control rule that defines switching on the light output from the luminaire in accordance with a second switch-on profile as a response to an occurrence of a second triggering condition that comprises detecting an increase in observed light level that meets said one or more criteria and receiving a status indication that indicates switching on the light output from the particular other luminaire taking place within said first predefined time window, wherein said second switch-on profile is different from said first switch-on profile.

According to another example embodiment, a method for controlling light output from a luminaire is provided, where said controlling is based at least on an occupancy sensor signal that is indicative of a current occupancy status in a space illuminated by the luminaire and on a light sensor signal that is indicative of currently observed light level in said space, the method comprising controlling light output from the luminaire in accordance with a lighting control logic comprising at least a first lighting control rule that defines switching on the light output from the luminaire in accordance with a first switch-on profile as a response to an occurrence of a first triggering condition that involves the occupancy sensor signal indicating a change from non-occupancy to occupancy; receiving status indications from other luminaires; and adjusting the lighting control logic during operation of the luminaire, wherein said adjusting comprises: storing, into a memory, a history of status indications received from one or more other lighting control devices and a history of light level indications derived based on the light sensor signal, analyzing (208) the stored status indications and light level indications in an attempt to identify a repeatedly occurring pattern that involves an increase in observed light level that meets one or more predefined criteria and reception of a status indication that indicates switching on the light output from a particular other luminaire taking place within a first predefined time window, and reprogramming, in response to identifying said repeatedly occurring pattern, the lighting control logic by introducing a second lighting control rule that defines switching on the light output from the luminaire in accordance with a second switch-on profile as a response to an occurrence of a second triggering condition that comprises detecting an increase in observed light level that meets said one or more criteria and receiving a status indication that indicates switching on the light output from the particular other luminaire taking place within said first predefined time window, wherein said second switch-on profile is different from said first switch-on profile.

According to another example embodiment, a computer program for controlling light output from a luminaire is provided, the computer program comprising computer readable program code configured to cause performing at least the method according to the example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by a computing apparatus, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting unit according to an example;
Figure 1B illustrates a block diagram of some components of a lighting arrangement according to an example;
Figure 1C illustrates a block diagram of some components of a lighting arrangement according to an example;
Figure 2 illustrates lighting units of a lighting arrangement arranged for illumination of a space according to an example;
Figure 3A schematically illustrates a switch-on profile according to an example;
Figure 3B schematically illustrates a switch-on profile according to an example;
Figure 3C schematically illustrates a switch-on profile according to an example;
Figure 4A schematically illustrates a switch-off profile according to an example;
Figure 4B schematically illustrates a switch-off profile according to an example;
Figure 4C schematically illustrates a switch-off profile according to an example;
Figure 5 illustrates a method according to an example; and
Figure 6 illustrates a block diagram of some elements of an apparatus according to an example.

### DESCRIPTION OF SOME EMBODIMENTS

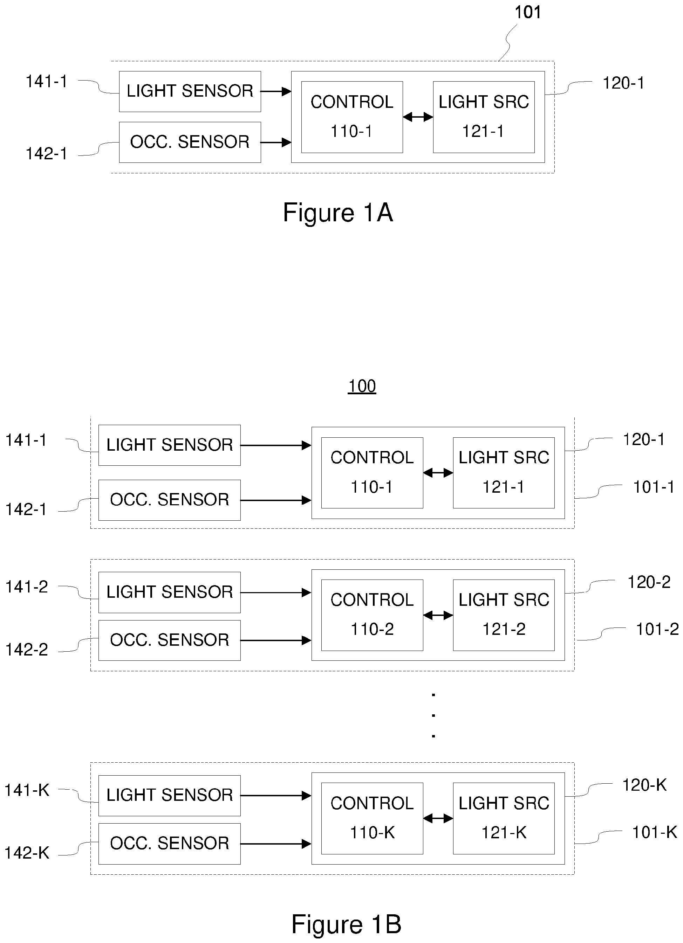

Figure 1A illustrates a block diagram of some logical components of a lighting unit 101 according to an example, the lighting unit 101 comprising a luminaire 120-1, a light sensor 141-1 and an occupancy sensor 142-1, where each of the light sensor 141-1 and the occupancy sensor 142-1 is coupled to the luminaire 120-1, e.g. via a respective wired connection. The luminaire 120-1 comprises a lighting control device 110-1 and at least one light source 121-1. The lighting control device 110-1 comprises a lighting control means (e.g. a lighting control portion) for controlling the light output from the at least one light source 121-1, an adaptation means (e.g. an adaptation portion) for adjusting operation of the lighting control means and a communication means (e.g. a communication portion) for wireless communication with respective control devices of other luminaires 120, the communication means hence enabling the communicative coupling between the luminaire 120-1 and other luminaires 120 via a wireless communication network and/or via respective wireless links. The lighting control device 110-1 is arranged to control light output of the luminaire 120-1 based at least in part on information received from the light sensor 141-1 and/or from the occupancy sensor 142-1 and/or on information received from other luminaires 120 via the communication means.

Figure 1B illustrates a block diagram of some logical components of a lighting arrangement 100 according to an example, where the lighting arrangement comprises a plurality of lighting units 101-1, 101-2, ..., 101-K. Hence, the lighting arrangement comprises luminaires 120-1, 120-2, ..., 120-K, light sensors 141-1, 141-2, ..., 141-K and occupancy sensors 142-1, 142-2, ..., 142-K, where the light sensor 141-k and the occupancy sensor 142-k are coupled to the luminaire 120-k via respective wired links. The lighting arrangement 100 may be also referred to as a lighting system or a lighting network. The luminaires 120-1, 120-2, ... 120-K represent a plurality of (i.e. two or more) luminaires, where an individual luminaire may be referred to via a reference number 120-k. Along similar lines, the light sensors 141-1, 141-2, ..., 141-K represent a plurality of (i.e. two or more) light sensors 141, where the individual light sensor coupled to the luminaire 120-k may be referred to via a reference number 141-k and the occupancy sensors 142-1, 142-2, ..., 142-K represent a plurality of (i.e. two or more) occupancy sensors 142, where the individual occupancy sensor coupled to the luminaire 120-k may be referred to via a reference number 142-k. Each luminaire 120-k comprises a respective lighting control device 110-k and respective at least one light source 121-k. The structure and operation of each luminaire 120-k is similar to that described in the foregoing for the luminaire 120-1.

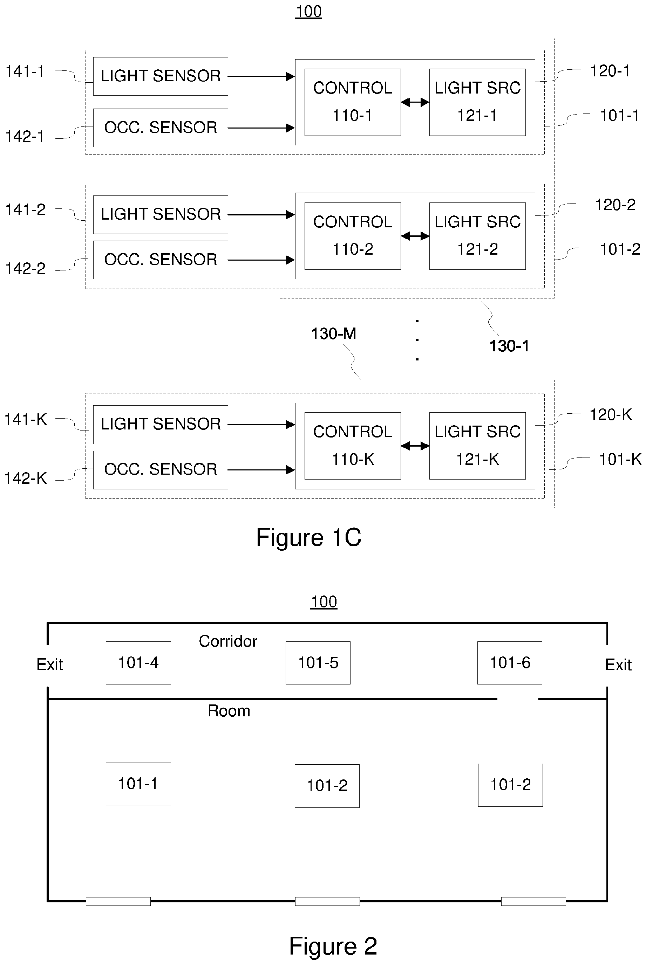

Figure 1C illustrates a variation of the lighting arrangement 100 according to an example, where luminaires 120-1 and 120-2 are assigned to a luminaire group 130-1 and the luminaire 120-K is assigned to a luminaire group 130-M. While the example of Figure 1C illustrates respective luminaire groups 130-1, 130-M of two and one luminaires 120, in general the luminaires 120 may be assigned to any desired number of luminaire groups 130-m that each comprise respective one or more luminaires 120.

As described in the foregoing, each luminaire 120-k is coupled to the light sensor 141-k and the occupancy sensor 142-k. Each of the light sensor 141-k and the occupancy sensor 142-k may be provided as part of the luminaire 120-k (e.g. arranged in the same housing with the luminaire 120-k) or as a respective sensor entity that is separate from the luminaire 120-k. In a further example, the light sensor 141-k and the occupancy sensor 142-k may be provided in a sensory assembly that is separate from the luminaire 120-k.

The light sensor 141-k may be arranged to observe ambient light level in (the portion of) the space the luminaire 120-k serves to illuminate and to provide a light sensor signal that is descriptive of or otherwise enables deriving the current ambient light level in (the portion of) the space the luminaire 120-k serves to illuminate. The light sensor signal from the light sensor 141-k received at the lighting control device 110-k may be referred to as a local light sensor signal. The occupancy sensor 142-k may be arranged to observe occupancy (or non-occupancy) in (the portion of) the space and to provide an occupancy sensor signal that is descriptive of or otherwise enables deriving the current occupancy status (occupancy or non-occupancy) in (the portion of) the space the luminaire 120-k serves to illuminate. The occupancy sensor signal from the occupancy sensor 142-k received at the lighting control device 110-k may be referred to as a local occupancy sensor signal. In a non-limiting example, the occupancy sensor 142-k is provided as a motion sensor, such as a passive infrared (PIR) sensor. In this regard, for practical purposes a sensor signal from a motion sensor indicating motion (or lack thereof) may directly serve as or translate into an occupancy sensor signal that indicates one of occupancy or non-occupancy in (the portion of) the space monitored by the motion sensor.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and the lighting control device 110-k comprises or is provided as an electronic ballast.

The lighting arrangement 100 may be arranged for illuminating respective portions or areas of an indoor or outdoor space or for illuminating respective one or more (indoor or outdoor) spaces that are adjacent or otherwise close to each other. As a few non-limiting examples, the illuminated space may comprise e.g. an office room, an open office space, a corridor, a stairway, a meeting room, a classroom, an auditorium, a retail store, a warehouse, a factory or other industrial establishment, a parking garage, a parking lot, a sports venue, etc. Figure 2 illustrates the lighting units 101 of the lighting arrangement 100 arranged for illumination of a space according to an example, which space in this non-limiting example comprises a corridor and a room that are adjacent to each other with a single door therebetween. In this example, the lighting arrangement 100 comprises lighting units 101-1, 101-2 and 101-3, arranged for illuminating respective sub-portions of the room and lighting units and lighting units 101-4, 101-5 and 101-6, each arranged for illuminating a respective sub-portion of the corridor. The lighting units 101-1 to 101-6 represent a plurality of (i.e. two or more) lighting units, where an individual lighting unit may be referred to via a reference number 101-k.

The luminaires 120-k of the lighting units 101-k of the lighting arrangement 100 may be arranged into one or more luminaire groups 130-m, along the lines illustrated via the example of Figure 1C. The luminaire 120-k may be defined as one belonging to a certain luminaire group 130-m via manual configuration or re-configuration upon installation or maintenance of the luminaire 120-k, the luminaire arrangement 100 and/or the space (to be) illuminated by the luminaire arrangement 100.

The lighting control device 110-k, e.g. the lighting control means therein, may be preprogrammed (or otherwise provided) with a lighting control logic that defines the manner of controlling the light output from the luminaire 120-k in dependence of the local light sensor signal and/or in dependence of the local occupancy sensor signal. The preprogrammed lighting control logic may define one or more pairs of a predefined triggering condition and a lighting control action to be carried out as a response to an occurrence of the predefined triggering condition. Each such pair may be referred to as a respective lighting control rule and hence the lighting control logic may comprise one or more lighting control rules. As an example in this regard, a triggering condition may comprise a local triggering condition that directly or indirectly pertains to the local occupancy sensor signal and/or to the local light sensor signal. Herein, the triggering condition is designated as 'local' due its occurrence locally, relying on the local occupancy sensor signal received from the occupancy sensor 142-k and/or the local light sensor signal received from the light sensor 141-k. In another example, a triggering condition may not be a local one but it may directly or indirectly pertain, for example, to an external sensor signal or to a message or signal of another type received from another luminaire 120.

The light output control provided by the lighting control device 110-k may substantially follow from the lighting control portion therein implementing one or more lighting control rules of the lighting control logic defined for the lighting control device 110-k. However, for brevity and clarity of the description, in the following lighting control actions arising from implementation of the lighting control logic are predominantly described as operations carried out by the lighting control device 110-k. The preprogrammed lighting control logic may be defined by configuring or reconfiguring the lighting control device 110-k to operate accordingly upon manufacturing, upon installation and/or upon maintenance operation carried out for the lighting control device 110-k and/or for the luminaire 120-k. The lighting control logic may be provided e.g. as program code stored in a memory in the lighting control device 110-k that will be executed by a processor in the lighting control device 110-k in the course of its operation.

Non-limiting examples of lighting control rules involving a respective local triggering condition that pertains to the local occupancy sensor signal include the following.
- The lighting control device 110-k may be arranged to, as a response to the local occupancy sensor signal indicating occupancy after a period of non-occupancy, switch on the light output from the luminaire 120-k at a respective target light intensity *I_{tgt,k}* or otherwise adjust the light output from the luminaire 120-k from a lower light intensity to the respective target light intensity *I_{tgt,k}.*
- The lighting control device 110-k may be arranged to, as a response to the local occupancy sensor signal indicating continuous occupancy, keep the light output from the luminaire 120-k at the current light intensity, e.g. at the respective target light intensity *I_{tgt,k}.*
- The lighting control device 110-k may be arranged to, as a response to the local occupancy sensor signal indicating non-occupancy after a period of occupancy, adjust the light output from the luminaire 120-k (from the current light intensity) to a respective stand-by light intensity *I_{off,k}.* As an example in this regard, the lighting control device 110-k may be arranged to start a switch-off timer to measure a respective switch-off delay period *T_{off,k}* and to adjust the light output from the luminaire 120-k to a respective stand-by light intensity *I*_{*off*,*k*} in response to the switch-off timer elapsing before the local occupancy sensor signal indicating occupancy. In another example, the lighting control device 110-k may be arranged to start the switch-off timer to measure the switch-off delay period *T_{off,k},* to start a dim-down timer to measure a respective dim-down delay period *T_{dim,k}* (where *T_{dim,k}* < *T*_{*off*,*k*}), to adjust the light output from the luminaire 120-k to a respective intermediate light intensity *I_{int,k}* (where *I*_{*off*,}*ₖ < I_{int,k} < I_{tgt,k})* in response to the dim-down timer elapsing before the local occupancy sensor signal again indicating occupancy and to adjust the light output from the luminaire 120-k to the respective stand-by light intensity *I*_{*off*,*k*} in response to the switch-off timer elapsing before the local occupancy sensor signal indicating occupancy.

Switching on the light output from the luminaire 120-k may comprise, for example, adjusting the light output of the luminaire 120-k to the respective target light intensity *I_{tgt,k}* in accordance with a switch-on profile that defines at least a switch-on period (i.e. a time period) for adjusting the light intensity from the stand-by light intensity *I*_{*off*,*k*} to the target light intensity *I_{tgt,k}* and a light intensity curve that defines the light intensity as a function of time over the switch-on period. Along similar lines, adjusting the light output from the luminaire 120-k to the respective stand-by light intensity *I*_{*off*,*k*} may comprise adjusting the light output to the respective stand-by light intensity *I*_{*off*,*k*} in accordance with a switch-off profile that defines at least a switch-off period (i.e. a time period) for adjusting the light intensity from the target light intensity *I*_{*tgt*,*k*} to the stand-by light intensity *I*_{*off*,*k*} and a light intensity curve that defines the light intensity as a function of time over the switch-off period. The switch-off delay period *T_{off,k}* together with the dim-down delay period *T_{dim,k}* and the associated intermediate light intensity *I_{int,k}* may be considered to serve as a straightforward example of a switch-off profile, whereas more detailed description of the switch-on profiles and switch-off profiles is provided in the following.

The lighting control parameters described above, e.g. the switch-off delay period *T_{off,k},* the dim-down delay period *T_{dim,k},* the target light intensity *I_{tgt,k},* the intermediate light intensity *I_{int,k}* and the stand-by light intensity *I*_{*off*,*k*} may be defined as part of the respective lighting control rules and they may be initially set to respective preprogrammed default values, which are stored in the memory in the lighting control device 110-k.

In this regard, the switch-off delay period *T_{off,k}* and the dim-down delay period *T_{dim,k}* may be initially set to respective default values, e.g. such that the switch-off delay period *T_{off,k}* is set to a first value and the dim-down delay period *T_{dim,k}* is set to a second value that is smaller than the first value. The first value may be for example a suitable value chosen from the range from 5 to 10 minutes whereas the second value may be of the order of a few minutes. In an example, a time period between the change of occupancy status from occupancy to non-occupancy and adjusting the light output to the intermediate light intensity *I_{int,k}* (which is a time period of duration *T_{dim,k}*) is longer than a time period between adjusting the light output to the intermediate light intensity *I_{int,k}* and adjusting the light output to the stand-by light intensity *I_{off,k}* (which is a time period of duration *T_{off,k}* - *T_{dim,k}*)*.* The target light intensity *I_{tgt,k}* may be defined as a respective first predefined percentage of the maximum light intensity of the at least one light source 121-k, for example a respective suitable value chosen from the range from 70 % to 100 %, e.g. 80 %, may be applied. Along similar lines, the intermediate light intensity *I_{int,k}* may be defined as a second respective predefined percentage of the maximum light intensity of the at least one light source 121-k, for example a respective suitable value chosen from the range from 20 % to 50 %, e.g. 30 %, may be applied. Moreover, the stand-by light intensity *I*_{*off*,*k*} may be defined as a third respective predefined percentage of the maximum light intensity of the at least one light source 121-k, for example a respective suitable value chosen from the range from 0 % to 20 %, e.g. 0 % or 10 %, may be applied.

According to an example, the lighting control device 110-k operates to provide the light output from the at least one light source 121-k at the respective target light intensity *I_{tgt,k}* whenever the local occupancy sensor signal indicates occupancy. In another example, the lighting control device 110-k may be arranged to adjust the light output from the at least one light source 121-k in dependence of the observed light level indicated by the local light sensor signal such that the resulting light level in combination with light from other light sources in the proximity of the luminaire 120-k (e.g. ambient light and/or light from one or more other luminaires 120) is kept at or close to a desired value. Such functionality may be referred to as light harvesting or daylight harvesting.

In order to provide the light harvesting functionality, the lighting control logic in the lighting control device 110 may define one or more lighting control rules that involve a respective local triggering condition that pertains to the local light sensor signal. Non-limiting examples in this regard include the following.
- The lighting control device 110-k may be arranged to, as a response to the local light sensor signal indicating light level that is below a respective target light level *L_{tgt,k}* by more than a respective margin *Mₖ,* increase the light intensity of the at least one light source 121-k until the local light sensor signal indicates light level that meets the respective target light level *L_{tgt,k}* (or until reaching 100 % light intensity).
- The lighting control device 110-k may be arranged to, as a response to the local light sensor signal indicating light level that exceeds the respective target light level *L_{tgt,k}* by more than the respective margin *Mₖ,* decrease the light intensity of the at least one light source 121-k until the local light sensor signal indicates light level that meets the respective target light level *L_{tgt,k}* (or until reaching the respective stand-by light intensity *I*_{*off*,*k*}).

In other words, when the local occupancy sensor signal indicates occupancy, the lighting control device 110-k may be arranged to apply the local light sensor signal to adjust the light intensity of the light output such that its own light output in combination with light provided by other sources (e.g. other luminaires 120 of the lighting arrangement 100 and/or ambient light) provides illumination at the respective target light level *L_{tgt,k}.* The lighting control parameters pertaining to lighting control actions triggered based on the local light sensor signal, i.e. the target light level *L_{tgt,k}* and the margin *Mₖ* may be set to respective preprogrammed values, which may be stored in the memory in the lighting control device 110-k.

The lighting control device 110-k may be further arranged to control the light output from the luminaire 120-k in accordance with one or more control signals received from a user-operable control panel arranged in the space (to be) illuminated by the luminaire 120-k. The control panel may be coupled to the lighting control device 110-k by a wired or wireless communication link or communication network. In this regard, the control panel may enable user actions for switching the lights on and setting the lights off and possibly also for adjusting the lights to a desired light intensity. Consequently, the lighting control device 110-k may be arranged to control the light output under control of the one or more control signals from the control panel accordingly, e.g. to switch on the light output from the luminaire 120-k (at the respective target light intensity *I_{tgt,k}*), to adjust the light output from the luminaire 120-k to the respective stand-by light intensity *I*_{*off*,*k*} (e.g. switch off the light output) and/or to adjust the light output from the luminaire 120-k to a user-selected light intensity.

The lighting control device 110-k may be, alternatively or additionally, arranged to switch on the light output from the luminaire 120-k in response to a command or message received from a remote control device, which may comprise, for example, a dedicated remote control device or a mobile communication device (such as a mobile phone or a tablet computer) provided with a software application that provides the remote control functionality. The remote control device may enable similar control of the light output from the luminaire 120-k as described above for the control panel, whereas the lighting control device 120-k may receive the one or more control signals from the remote control device via a wireless communication link or communication network, e.g. via the communication means of the lighting control device 110-k.

The lighting control device 110-k may be, alternatively or additionally, arranged to switch on the light output from the luminaire 120-k in response to the luminaire 120-k receiving operating power (e.g. from the mains electricity) after a period of not receiving the operating power.

As described in the foregoing, the lighting control device 110-k comprises the communication means that enable the lighting control device 110-k to wirelessly communicate with other lighting control devices of the lighting arrangement 100, thereby enabling wireless communication between luminaires 120 of the lighting arrangement 100. The communication means in the lighting control device 110-k may comprise a wireless transceiver that is capable of communicating with wireless transceivers in respective lighting control devices 110 of other luminaires 120 using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy, ZigBee, WLAN/Wi-Fi according to an IEEE 802.11 family of standards, etc. Further examples include infrared communications and other non-radio-based short-range communication techniques.

The choice of the short-range wireless communication technique and network topology for a specific embodiment of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth Low-Energy Mesh networking protocol known in the art.

In the course of its operation, the lighting control device 110-k is arranged to transmit status indication messages via the communication means therein. Each status indication message comprises, in addition to information defined by the applied communication protocol, one or more status indications that are descriptive of current (or recent) operating characteristic of the luminaire 120-k and/or the lighting control device 110-k transmitting the status indication message. Conversely, the lighting control device 110-k receives status indication messages (and hence status indications) from other lighting control devices of the lighting arrangement 100. A status indication transmitted from the lighting control device 110-k may comprise an action indication that identifies a lighting control action taken by the lighting control device 110-k and/or a sensor indication that is descriptive of an occupancy status or an observed light level in the lighting control device 110-k. Non-limiting examples of such status indications are described in the following:
- A status indication may comprise an action indication that indicates the lighting control device 110-k switching on the light output from the luminaire 120-k (e.g. at the respective target light intensity *I_{tgt,k}* or at another light intensity).
- A status indication may comprise an action indication that indicates the lighting control device 110-k keeping the light output from the luminaire 120-k at the current light intensity level (e.g. at the respective target light intensity *I_{tgt,k}* or at another light intensity)).
- A status indication may comprise an action indication that indicates the lighting control device 110-k switching off the light output from the luminaire 120-k (e.g. completely switching off the light or adjusting the light output to the respective stand-by light intensity *I*_{*off*,*k*}).
- A status indication may comprise an action indication that indicates the lighting control device 110-k adjusting or setting the light output from the luminaire 120-k to a light intensity indicated in the action indication, thereby enabling directly indicating the new light intensity adopted for the luminaire 120-k. In a related example, such an action indication may indicate the lighting control device 110-k adjusting or changing the light output from the luminaire 120-k from a first light intensity indicated in the action indication to a second light intensity indicated in the action indication, thereby enabling explicitly indicating dimming down or dimming up of the light intensity (to be) applied for the luminaire 120-k. Such an action indication may result, for example, from a change in the light intensity level of the at least one light source 121-k that arises from a lighting control action taken by the lighting control device 110-k in response to a respective triggering condition that pertains to the local light sensor signal and/or to the local occupancy sensor signal or from one or more control signals received from the user-operable control panel or remote control device (e.g. in accordance to one of the examples described in the foregoing). In the lighting control device 110 receiving such status indication, the received light intensity indication may be considered as a remote light intensity indication pertaining to the luminaire 120-k.
- A status indication may comprise a sensor indication that indicates the current occupancy status (occupancy or non-occupancy) derived by the lighting control device 110-k based on the local occupancy sensor signal therein.
- A status indication may comprise a sensor indication that indicates the current observed light level derived by the control device 110-k based on the local light sensor signal therein.

The lighting control device 110-k may be arranged to transmit a status indication comprising a respective action indication, for example, each time it takes a lighting control action that changes the light intensity of the light output from the luminaire 120-k (e.g. switches the light on, switches the light to the respective stand-by light intensity *I*_{*off*,*k*}, dims down the light output to the respective intermediate light intensity *I_{int,k},* adjusts the light output to some other light intensity, etc.) as a response to a respective predefined local triggering condition. Moreover, a status message comprising an action indication that indicates keeping the light output of the luminaire 120-k at the current light intensity level may be transmitted e.g. at predefined time intervals during a continuous period of the local occupancy sensor signal indicating occupancy. The lighting control device 110-k may be arranged to transmit a status indication comprising a respective sensor indication, for example, at predefined time intervals and/or in response to a change in the underlying local sensor signal (e.g. a change from occupancy to non-occupancy or vice versa, a change of observed light level that exceeds a predefined change threshold).

In an example, a status indication or a status indication message conveying the status indication may further comprise a device identifier assigned to the lighting control device 1 10-k (or to the luminaire 120-k) that has transmitted the status indication, in other words an identification of the luminaire 120-k to which the status indication pertains. The device identifier may comprise, for example, an address, a serial number, a name, etc. assigned to the lighting control device 110-k (or that assigned to the luminaire 120-k) or to the communication means therein. The status indication or the status indication message conveying the status indication may further comprise a group identifier assigned to the luminaire group to which the luminaire 120-k that transmits the status indication belongs.

The lighting control device 110-k may be arranged to derive, upon reception of a status message carrying one or more status messages originating from another lighting control device 110-j, an indication and/or a measure of distance between the lighting control devices 110-k and 110-j and hence between the luminaires 110-k and 110-j. In case the wireless communication between the luminaires 120 of the lighting arrangement 100 relies on a wireless mesh network model, the status message pertaining to the luminaire 120-j may be received via one or more intermediate nodes and the status message (or a lower-layer message that carries the status message) may comprise an indication of hop count that indicates the number of hops (i.e. the number of intermediate nodes of the wireless mesh network) between the lighting control devices 110-k and 110-j. Consequently, the hop count received in a status message may serve as an indication of the distance between the lighting control devices 110-k and 110-j (and hence between the luminaires 120-k and 120-j). In case the wireless message carrying the status message pertaining to the luminaire 120-j is received at the lighting control device 110-k directly from the lighting control device 110-j (i.e. without intermediate nodes), the lighting control device 110-k may be arranged to derive a received signal strength indication (RSSI) pertaining to the received status message. Since in this scenario the RSSI at least in part reflects the distance between the other lighting control device 110-j transmitting the status message and the lighting control device 110-k receiving status message, the RSSI value may serve as an indication of the distance between the lighting control devices 110-k and 110-j (and hence between the luminaires 120-k and 120-j).

In addition to the one or more lighting control rules that involve a respective local triggering condition, the preprogrammed lighting control logic in the lighting control device 110-k may further define one or more lighting control rules that involve a respective remote triggering condition, e.g. one or more pairs of a predefined remote triggering condition and an associated lighting control action to be carried out as a response to an occurrence of the predefined remote triggering condition. In this regard, a remote triggering condition may directly or indirectly pertain to a status indication received from the lighting control device 110-n of another luminaire 120-n that belongs to the same luminaire group 130-m with the luminaire 120-k. Herein, the triggering condition is designated as 'remote' due its occurrence as a consequence of a triggering condition and/or a lighting control action having taken place in the luminaire 120-n. Non-limiting examples of such lighting control rules that involve a lighting control action to be taken as a response to an occurrence of a remote triggering condition include the following.
- The lighting control device 110-k may be arranged to, as a response to receiving a status indication indicating that the luminaire 120-n that belongs to the same luminaire group 130-m with the luminaire 120-k has switched on its light output, switch on the light output from the luminaire 120-k (e.g. at the respective target light intensity *I_{tgt,k}*) or adjust the light output from the luminaire 120-k to the respective target light intensity *I_{tgt,k},* depending on the current light output (or lack thereof) from the luminaire 120-k.
- The lighting control device 110-k may be arranged to, as a response to receiving a status indication indicating that the luminaire 120-n that belongs to the same luminaire group 130-m with the luminaire 120-k has kept on its light output at its current light intensity, switch on the light output from the luminaire 120-k (e.g. at the respective target light intensity *I_{tgt,k}*) or adjust the light output from the luminaire 120-k to the respective target light intensity *I_{tgt,k},* depending on the current light output (or lack thereof) from the luminaire 120-k.
- The lighting control device 110-k may be arranged to, as a response to receiving a status indication indicating that the luminaire 120-n that belongs to the same luminaire group 130-m with the luminaire 120-k has adjusted its light output to the respective stand-by light intensity *I*_{*off*,*k*} (e.g. switched off its light output), adjust the light output from the luminaire 120-k to the respective stand-by light intensity *I*_{*off*,*k*}.

In other words, the preprogrammed lighting control logic may include respective one or more lighting control rules that define that the lighting control device 110-k follows the lighting control actions taken by (any) other luminaire 120-n that is assigned to the same luminaire group 130-m with the luminaire 120-k.

In the course of its operation, the lighting control device 110-k may be arranged to store, in the memory therein, respective indications that are descriptive of the operation of the lighting control device 110-k and/or the luminaire 120-k in general. Such data may be referred to as history data and it may comprise one or more of the following:
- A history of locally obtained sensor data including light level indications derived based on the local light sensor signal and/or occupancy indications derived based on the local occupancy sensor signal. In this regard, the light level indications may be stored at respective predefined time intervals and/or each time the observed light level changes by more than a predefined threshold, whereas the occupancy indications may be stored at respective predefined time intervals and/or each time a change in occupancy status (from non-occupancy to occupancy or vice versa) is observed.
- A history of light intensity levels applied for the light output of the at least one light source 121-k at the luminaire 120-k. This information may be referred to as local light intensity indications. The local light intensity indications may be stored at predefined time intervals and/or each time the lighting control device 110-k operates to adjust or change the light intensity of the at least one light source 121-k.
- A history of status indications received from respective lighting control devices 110 of other luminaires 120 of the lighting arrangement 100, including or accompanied by a device identifier of the lighting control device 110-j (or that of the luminaire 120-j) to which the respective status indication pertains. The stored received status indications may be further accompanied by the RSSI derived for or the hop count received in the underlying status indication message.

The history information stored in the memory may cover a predefined time period and the indications included in the history data may be stored together with respective timing information that indicates the capturing time and/or the transmission time of a respective piece of stored data (whichever applies). The timing information may comprise a respective timestamp that may indicate, for example, one or more of the following: time with respect to a predefined reference time, time of the day, day of the week, month of a year. As an example in this regard, the time of the day may define one of daytime (when a threshold-exceeding amount of ambient light is assumed to be available) and nighttime (when a non-threshold-exceeding amount of ambient light is assumed to be available), whereas in another example the time of the day may define or at least estimate the clock time, including at least an hour of the day, possibly together with minute of the hour.

In the course of its operation, the adaptation means in the lighting control device 110-k may be arranged to adjust, reprogram or complement the preprogrammed lighting control logic defined for the lighting control device 110-k based at least in part on the status indications received from the lighting control devices of other luminaires 120 of the lighting arrangement 100. In this regard, the adaptation means may be arranged to carry out a self-adaptation procedure to complement or at least partially reprogram preprogrammed lighting control logic defined for the lighting control device 110-k. As non-limiting examples, reprogramming of the preprogrammed lighting control logic may comprise one or more of the following: introducing an additional lighting control rule, deleting a lighting control rule, modifying a triggering condition defined for a lighting control rule, modifying a lighting control action defined for a lighting control rule, modifying a lighting control parameter associated with a lighting control rule.

As an example, the self-adaptation procedure may be initiated in response to a user command received e.g. via a user interface of the lighting control device 110-k or in a specific control message received via the communication means. In another example, the self-adaptation procedure may be initiated according to a predefined schedule, e.g. at predefined time intervals. In a further example, the self-adaptation procedure is carried out continuously or substantially continuously.

According to a non-limiting example, some aspects of the self-adaptation procedure with respect to a given local triggering condition may be carried out, for example, along the lines described in paragraphs [0032] to [0058] of the European patent publication no. 3171674 A1. Even though the examples pertaining to the analysis procedure are described therein with references to determination of a relationship strength that is indicative of regularity at which 'triggering local input signals' have been observed after first having received an 'indication message from a 'particular other device', the procedure equally applies to determination of a relationship strength that is indicative of regularity at which a given local triggering condition has been observed after first having received a given status indication from the lighting control device of a particular other luminaire of the lighting arrangement 100, *mutatis mutandis.* According to an example, the analysis of received status indications may be carried out to determine a respective relationship strength for a number of other luminaires 120 of the lighting arrangement and for a number of local triggering conditions, followed by complementing or reprogramming the lighting control logic of the lighting control device 110-k in accordance with the determined relationship strengths e.g. by introducing respective one or more additional lighting control rules.

According to another non-limiting example, some aspects of the self-adaptation procedure may comprise an analysis of status indications received from the lighting control devices of other luminaires 120 of the lighting arrangement 100 in an attempt to identify a repeatedly occurring pattern that includes a certain sequence of one or more received status indications followed by a given local triggering condition and, in case of identifying such a repeatedly occurring pattern, complementing or reprogramming the lighting control logic in the lighting control device 110-k to further include a lighting control rule that defines carrying out the lighting control action associated with the given local triggering condition in response to reception of said given sequence of one or more status indications included in the identified pattern. The self-adaptation procedure may be carried out separately for a plurality of the local triggering conditions (and the associated lighting control actions) defined for the lighting control device 110-k. In this regard, some aspects of the analysis part of the self-adaptation procedure with respect to a single given local triggering condition may be carried out, for example, along the lines described in paragraph [0033] of the European patent publication no. 2919562 A1, incorporated herein by reference.

According to an example, the analysis of received status indications may identify one or more different patterns that involve the given local triggering condition, each identified pattern occurring at least a predefined number of times. Hence, the analysis identifies one or more candidate sequences of one or more status indications that are followed by a respective occurrence of the given local triggering condition, and the analysis may be followed by complementing or reprogramming the lighting control logic of the lighting control device 110-k to include one or more additional lighting control rules that rely on respective ones of the one or more candidate sequences. A candidate sequence is considered as a repeatedly occurring one in case it meets one or more predefined occurrence criteria pertaining to its number and/or frequency of occurrences in combination with the given local triggering condition, where the one or more predefined occurrence criteria may depend on the given local triggering condition under consideration and/or on the lighting characteristics of the at least one light source 121-k of the luminaire 120-k. Moreover, the aspect of complementing or reprogramming the lighting control logic of the lighting control device 110-k may be carried out in dependence of the lighting control action associated with the given local triggering condition under consideration and/or in dependence of the lighting characteristics of the at least one light source 121-k of the luminaire 120-k.

In general, the self-adaptation procedure may comprise an analysis of the history of locally obtained sensor data and the history of status indications received from respective lighting control devices of other luminaires 120 of the lighting arrangement 100, for example in accordance with the respective techniques described in the European patent publications no. 2919562 A1 and no. 3171674 A1 outlined above and/or in accordance with other machine-learning techniques that rely e.g. on fuzzy logic, neural networks and/or other artificial intelligence techniques known in the art.

Along the lines discussed in the foregoing, the preprogrammed lighting control logic in the lighting control device 110-k defines one or more lighting control rules that each define a respective pair of a triggering condition and an associated lighting control action to be carried out as a response to an occurrence of the triggering condition, possibly together with one or more associated lighting control parameters. As an example, a preprogrammed lighting control rule may define switching on the light output from the luminaire 120-k as a response to the local occupancy sensor signal therein indicating a change from non-occupancy to occupancy. In this regard, in case of any preprogrammed lighting control rule that pertains to switching on the light output from the luminaire 120-k, the preprogrammed lighting control rule may further define a switch-on profile to be applied in switching on the light output via application of the respective lighting control rule, wherein the switch-on profile defines the manner of adjusting the light output from the luminaire 120-k from the stand-by light intensity *I*_{*off*,*k*} to an active light intensity *I*_{*on*,}*ₖ,* where the active light intensity *I_{on,k}* may comprise the target light intensity *I_{tgt,k}* or another light intensity that is higher than the stand-by light intensity *I*_{*off*,*k*} and different from the target light intensity *I_{tgt,k}.* Typically, but not necessarily, the active light intensity *I_{on,k}* defined for a certain switch-on profile applicable in the luminaire 120-k is smaller than or equal to the target light intensity *I_{tgt,k}* defined for the luminaire 120-k.

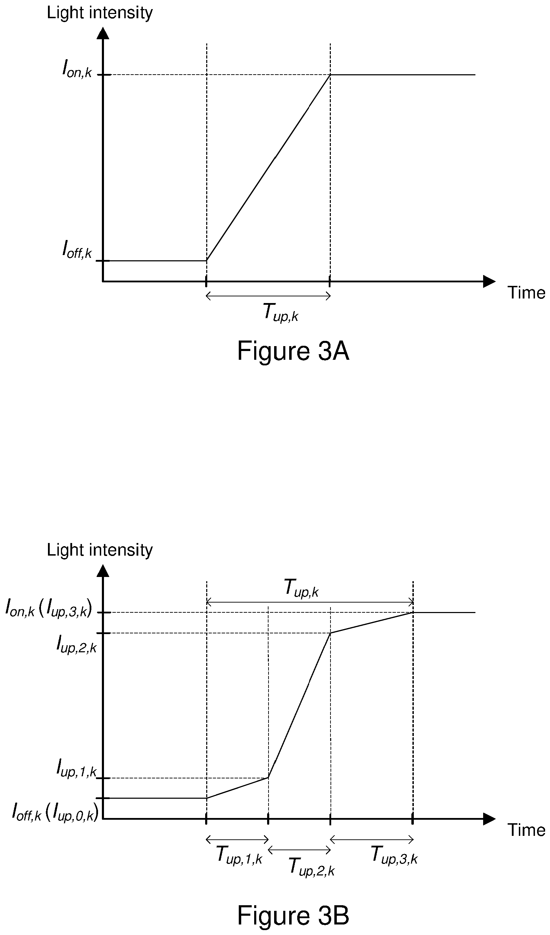

A switch-on profile may define at least a time period *T_{up,k}* for adjusting the light output of the luminaire 120-k from the stand-by light intensity *I*_{*off*,*k*} to the active light intensity *I_{on,k}* and a light intensity curve that defines the change of light intensity as a function of time over the time period *T_{up,k}* The time period *T_{up,k}* may be also referred to as a switch-on period or as a rise time. In an example, the light intensity curve is defined by the stand-by light intensity *I*_{*off*,*k*} and the active light intensity *I_{on,k},* thereby providing a linear or substantially linear light intensity curve that defines a linear or substantially linear increase from the stand-by light intensity *I*_{*off*,*k*} at the beginning of the switch-on period *T_{up,k}* to the active light intensity *I_{on,k}* at the end of the switch-on period *T_{up,k},* as schematically illustrated in Figure 3A. As described in the foregoing, the stand-by light intensity *I*_{*off*,*k*} may be defined as respective percentages of the maximum light intensity of the at least one light source 121-k, whereas the active light intensity *I_{on,k}* may be defined in a similar manner. The switch-on period *T_{up,k}* may be set to a suitable value selected, for example, from a range from 50 milliseconds (ms) to 20 seconds, e.g. 200 ms.

In the above example, the switch-on period *Tᵤₚ,ₖ,* together with the stand-by light intensity *I*_{*off*,*k*} and the active light intensity *I_{on,k},* hence (implicitly) defines a light intensity change rate *r_{up,k}* for the luminaire 120-k according to the respective switch-on profile. Herein, the light intensity change rate *r_{up,k}* may be derived, for example, as *r_{up,k}* = (*I_{on,k}* -*I_{off,k}*)/*T_{up,k}.* In a variation of the above example, instead of explicitly defining the switch-on period *T_{up,k},* a switch-on profile may define the light intensity change rate *r_{up,k}* e.g. as an amount of increase in light intensity per time unit. Consequently, together with the stand-by light intensity *I*_{*off*,*k*} and the active light intensity *I_{on,k}* the light intensity change rate *r_{up,k}* (implicitly) defines the switch-on period *T_{up,k}* involved in increasing the light intensity of the luminaire 120-k from the stand-by light intensity *I*_{*off*,*k*} to the active light intensity *I_{on,k}* in accordance with the respective switch-on profile, e.g. as *T_{up,k}* = (*I_{on,k}* - *I_{off,k}*)/*r_{up,k}.*

In another example, a switch-on profile may further define the light intensity curve via one or more ramp-up light intensities *I_{up,j,k}* together with their respective timing within the switch-on period *T_{up,k},* thereby defining two or more sub-periods of the switch-on period *T_{up,k}* that may be referred to as respective (time) segments of the switch-on period *T_{up,k}* and that, at least conceptually, provide a piecewise linear or substantially piecewise linear light intensity curve that defines piecewise linear or substantially piecewise linear increase from the stand-by light intensity *I*_{*off*,*k*} at the beginning of the switch-on period *T_{up,k}* to the active light intensity *I_{on,k}* at the end of the switch-on period *T_{up,k}.* The timing may be defined e.g. with respect to the beginning of the switch-on period *T_{up,k},* with respect to the end of the switch-on period *T_{up,k}* and/or with respect to an adjacent (time) segment of the switch-on period *T_{up,k}.* In the following, the timing of each (time) segment of the switch-on period *T_{up,k}* is defined as a respective ramp-up period *T_{up,j,k}* that sum up to the switch-on period *T_{up,k},* e.g. such that Σ*ⱼT*_{*up*,*j*,*k*} = *T_{up,k}.*

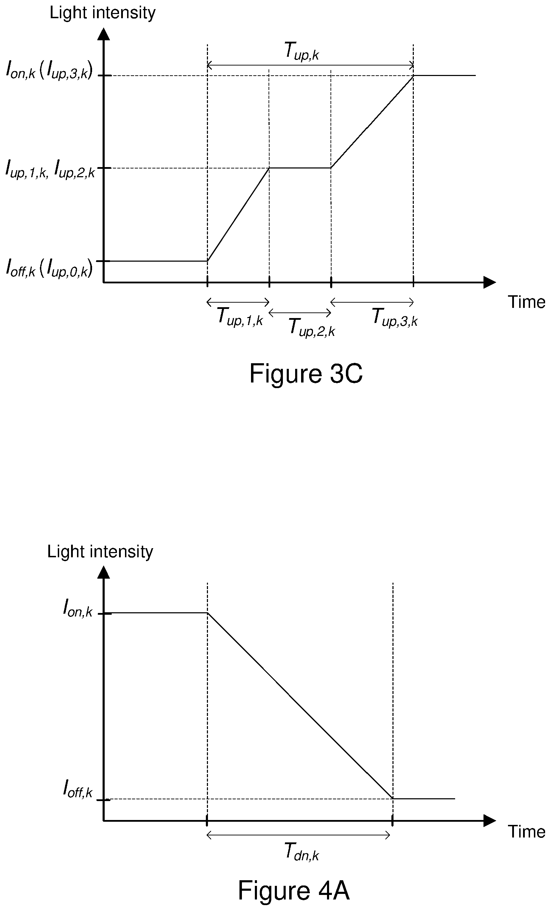

Each of the ramp-up light intensities *I_{up,j,k}* may be set to a respective value (e.g. a respective percentage of the maximum light intensity of the at least one light source 121-k) between the stand-by light intensity *I_{off,k}* and the active light intensity *I_{on,k},* i.e. *I_{off,k}* ≤ *I_{up,j,k}* ≤*I_{on,k.}* Preferably, in order to have any perceivable or otherwise recognizable effect over defining the single switch-on period *T_{up,k},* the ramp-up light intensities *I_{up,j,k}* and the respective ramp-up periods *T_{up,j,k}* are selected such that they define a nonlinear (but a piecewise linear) change of light intensity from the stand-by light intensity *I*_{*off*,*k*} to the active light intensity *I_{on,k}* as a function of time. Figures 3B and 3C schematically illustrate respective examples of light intensity curves defined via respective one or more ramp-up light intensities *I_{up,j,k.}*

For notational convenience we may assume that there are *J* ramp-up periods *T_{up,j,k}* with j = 1,...,*J* and further define *I_{up,0,k} = I*_{*off*,*k*} and *I_{up,j,k}* = *I_{on,k}.* Consequently, in general, a switch-on profile defines one or more ramp-up light intensities *I_{up,j,k}* and respective ramp-up periods *T_{up,j,k}* that define the time period (and hence a respective light intensity change rate *r_{up,j,k}*) for implementing the change from the light intensity *I*_{*up,j-*1*,k*} to the light intensity *I_{up,j,k},* thereby defining either a (substantially) linear or (substantially) piecewise linear curve for ramping up the light intensity of the luminaire 120-k from the stand-by light intensity *I*_{*off*,*k*} = *I_{up,0,k}* to the active light intensity *I_{on,k}* = *I_{up,j,k}* over a time period having the duration *T_{up,k}.* The change of light intensity from the light intensity *I*_{*up,j-*1*,k*} to the light intensity *I_{up,j,k}* during the respective ramp-up period *T_{up,j,k}* within the overall switch-on period *T_{up,k}* may be referred to as *j*:th segment (or segment j) of the switch-on period.

In the above examples, each of the switch-on period *T_{up,k},* the ramp-up periods *T_{up,j,k},* the light intensity change rates *r_{up,k}, r_{up,j,k},* the stand-by light intensity *I*_{*off*,*k*}, the active light intensity *I_{on,k}* and the ramp-up light intensities *I_{up,j,k}* that may be defined by a switch-on profile are to be considered as respective target values, whereas e.g. physical limitations arising from a practical implementation of the lighting control device 110-k and/or other components or elements of the luminaire 120-k may result in an unintentional deviation from the respective intended values set for the respective parameters of the switch-on profile. Moreover, Figures 3A, 3B and 3C and the above examples pertain to a practical approach where a switch-on profile defines the change in light intensity over time via a light intensity curve that is defined by two or more data points in the time-light intensity plane, thereby defining a linear or piecewise linear increase in light intensity over time. In a general case, the light intensity over the switch-on period *T_{up,k}* may be defined as a(n increasing) function of time *I_{up,k}*(*t*) and the light intensity change rate over the switch-on period *T_{up,k}* may be defined as a first derivative of that function, e.g. as *r_{up,k}*(*t*) = *dI_{up,j,k}*(*t*)/*dt,* which does not necessarily exhibit any (piecewise) linearity.

In view of the foregoing, a few non-limiting examples of providing two switch-on profiles that differ from each other are outlined in the following:
- A first switch-on profile may define a shorter or longer switch-on period *T_{up,k}* than a second switch-on period, in other words the first switch-on profile may define reaching the active light intensity *Tₒₙ,ₖ* faster or slower than defined by the second switch-on profile.
- A first switch-on profile may define a lower or higher active light intensity *I_{on,k}* than a second switch-on profile, in other words the first switch-on profile may define switching the light output of the luminaire 120-k to a lower or higher light intensity than the second switch-on profile.
- A first switch-on profile may have a higher or lower number of ramp-up light intensities *I_{up,j,k}* than a second switch-on profile and, consequently, the first switch-on profile may define a higher or lower number of changes in the light intensity change rate *T_{up,j,k}* than defined by the second switch-on profile.
- A first switch-on profile defining at least intermediate one ramp-up light intensity *I_{up,j,k}* (in addition to the active light intensity *I_{on,k}* = *I_{up,J,k}*) may define a shorter or longer sub-period of the overall switch-on period *T_{up,k}* for reaching a certain interim light intensity between the stand-by light intensity *I*_{*off*,*k*} and the active light intensity *I_{on,k}* than defined by a second switch-on period, in other words the first switch-on period may define reaching the interim light intensity faster or slower than defined by the second switch-on profile.

Since the switch-on profile typically defines the change of light intensity from the stand-by light intensity *I_{off,k}* to the active light intensity *I_{ion,k}* within a time period that is typically at most in a range of a few hundred milliseconds, a human observer is typically unable to detect any change in duration of the overall switch-on period *T_{up,k}* and/or to detect any change in the light intensity change rate *r_{up,j,k}* that may occur when switching on the light output from the luminaire 120-k according to a switch-on profile that includes one or more intermediate ramp-up light intensities *I_{up,j,k}* (in addition to the active light intensity *I_{on,k}* = *I_{up,J,k}*)*.* In contrast, the light sensor 141-k coupled to the lighting control device 110-k is able to detect any possible changes in duration of the overall switch-on period *T_{up,k}* and/or any changes in the light intensity change rate *r_{up,j,k}* that may occur during the switch-on period *T_{up,k}* applied by another luminaire 120 of the lighting arrangement 100.

As a related aspect, due to typically unknown operating characteristics of other luminaires 120 of the lighting arrangement 100 and their unknown distances to (the portion of) the space the luminaire 120-k serves to illuminate and due to possibly simultaneous light output from a plurality of other luminaires 120, in a practical implementation the light sensor 141-k coupled to lighting control device 110-k is typically not able to estimate the absolute amount of light actually received from a particular other luminaire 120-p of the lighting arrangement 100. Moreover, in many scenarios it may be difficult to associate a detected change in the light level observed at the lighting control device 110-k to the particular other device 110-p when it switches on its light output. On the other hand, the local light sensor signal from the light sensor 141-k typically enables the lighting control device 110-k to detect relative changes in observed light level and, moreover, accurate detection of timing associated with the relative changes in the observed light level. Therefore, the lighting control device 110-k is able to reliably detect a duration of a time period during which a change in observed light level occurs as well as to reliably detect the light level change rate (e.g. the change in observed light level as a function of time) and timing of possible changes in light level change rate. Consequently, the lighting control device 110-k is able to detect an application of a certain switch-on profile applied by the particular other luminaire 120-p.

In this regard, a time segment of the local light sensor signal in the lighting control device 110-k captured at a time period during which the particular other luminaire 120-p applies a certain switch-on profile represents a light level curve that does not directly indicate the light intensity *I_{up,j,p}* (or *I*_{*up*,*p*}(*t*)) applied for the light output of the luminaire 120-p or the light intensity change rate *r_{up,j,p}* (or *r_{up,p}*(*t*)) applied for the light output of the luminaire 120-p during the switch-on period *T_{up,p},* but the shape of the light level curve nevertheless closely resembles that of the light intensity curve arising from application of the certain switch-on profile in the particular other luminaire 120-p: the overall duration of the light level curve is the same or similar to that switch-on period duration *T_{up,p}* and any changes in light level change rate indicated by the light level curve temporally match the changes in the light intensity change rate *r_{up,j,p}* (or *r_{up,p}*(*t*)) defined for the certain switch-on profile, thereby resulting in the light level curve that differs in amplitude from the light intensity curve defined by the certain switch-on profile but where the timing and relative changes in the light level change rate match those of light intensity change rate *r_{up,j,p}* (or *r_{up,p}*(*t*)) defined for the certain switch-on profile. In other words, a derivative of the light level curve captured at the lighting control device 110-k in response to the particular another luminaire 120-p applying the certain switch-on profile matches (e.g. is similar to) a first derivative of the light intensity change rate *r_{up,j,p}* (or *r_{up,p}*(*t*)) or a second derivative of the light intensity curve according to the certain switch-on profile.

Hence, the lighting control device 110-k may be able to detect certain characteristics of a switch-on profile applied in the particular other luminaire 120-p and, consequently, the lighting control device 110-k may be able to recognize the switch-on profile applied in the particular other luminaire 120-p and, conversely, (the respective lighting control devices 110 in) the other luminaires 120 may be able to detect the certain characteristics of a switch-on profile applied in the luminaire 120-k and to recognize the switch-on profile applied in the luminaire 120-k. Consequently, usage of the certain switch-on profile or usage a switch-on profile having the certain characteristics when switching on the light output from the luminaire 120-k may be applied, for example, to convey information about current operating characteristic(s) of the luminaire 120-k to those ones of the other luminaires 120 whose respective light sensors 141 are able to see the light output of the luminaire 120-k. More detailed examples in this regard are described in the following.

For the purpose of an example of operation of the adaptation means in the lighting control device 110-k, we may assume that the lighting control logic comprises a first lighting control rule that defines switching on the light output from the luminaire 120-k in accordance with a first switch-on profile as a response to an occurrence of a first triggering condition that comprises the local occupancy sensor signal indicating a change in the occupancy state from non-occupancy to occupancy. The first switch-on profile may be referred to as a default switch-on profile. In this regard, the lighting control logic may comprise various further lighting control rules that may pertain to adjusting or otherwise controlling the light output from the luminaire 120-k based at least in part on the local occupancy sensor signal and/or the local light sensor signal, e.g. according to the examples described in the foregoing. The default switch-on profile may be the same or similar in (the respective lighting control devices 110 of) each of the luminaires 120 of the lighting arrangement, thereby resulting in a scenario where application of the first lighting control rule in any of the luminaries 120 results in the respective luminaire 120 switching on its light output in accordance with the same or similar switch-on profile. Moreover, the default switch-on profile may be defined to be available only for switching on the light output via application of the first lighting control rule.

According to an example, some aspects of the self-adaptation procedure in the lighting control device 110-k may comprise an analysis of the history data, comprising an analysis of a history status indications received from the lighting control devices of other luminaires 120 of the lighting arrangement 100 in view of the history of locally obtained light level indications derived based on the local light sensor signal in an attempt to identify a repeatedly occurring pattern that involves an increase in observed light level that meets one or more predefined light level criteria and reception of a status indication providing an indication of a particular other luminaire 120-p having switched on its light output taking place, wherein the increase in observed light level and the reception of the status indication occur within a predefined time window *T_{ad}*. Hence, the analysis aims at identifying a repeatedly occurring pattern where the increase in observed light level (substantially) temporally coincides with reception of a status indication of said type.

According to an example, the analysis for identification of a repeatedly occurring pattern may be carried out based on the history data in its entirety or based on a portion of history data obtained for a desired time period, e.g. based on a portion of history data that covers most recently obtained history data over a time period of desired duration. In this regard, the analysis may be carried out based on light level indications and status indications obtained within one or more time periods during which the light output from the luminaire 120-k is switched off or adjusted to the respective stand-by light intensity *I*_{*off*,*k*}. Such limitation ensures that the light level indications considered in the analysis are not distorted by the light received from the at least one light source 121-k and they hence provide a more reliable and/or accurate measure of light originating from the other luminaires 120 of the lighting arrangement 100.

In case a repeatedly occurring pattern of the above-described kind is identified in the analysis carried out in the lighting control device 110-k, the lighting control logic therein may be complemented or reprogrammed to include a second lighting control rule that defines switching on the light output from the luminaire 120-k in accordance with a second switch-on profile as a response to an occurrence of a second triggering condition, wherein the second switch-on profile is different from the first switch-on profile. According to an example, the second triggering condition comprises receiving a status indication that indicates switching on the light output from the particular other luminaire 120-p. In another example, the second triggering condition comprises receiving the status indication that indicates switching on the light output from the particular other luminaire 120-p and detecting an increase in observed light level that meets the one or more predefined light level criteria within the predefined time window *T_{ad}*.

Since the second switch-on profile is different from the first switch-on profile and assuming that the first (default) switch-on profile is available exclusively for the first lighting control rule, switching on the light output from the luminaire 120-k via application of the second lighting control rule conveys to the other luminaires 120 an indication of the luminaire 120-k having switched on its light output via mechanism other than the first lighting control rule. Conversely, the lighting control device 110-k may be able to detect usage of the first switch-on profile, the second switch-on profile or a further switch-on profile by the particular other luminaire 120-k and carry out the self-adaptation procedure in dependence of this knowledge. This aspect will be described in more detail in the following.

Referring back to the time window *T_{ad}*, its duration should be sufficiently short to ensure that the increase in the observed light level detected at the lighting control device 110-k is associated with an event that resulted in an occurrence of a respective triggering condition in the particular other luminaire 120-p and, consequently, caused the particular other luminaire 120-p switching on its light output, e.g. an event that has resulted in the local occupancy sensor signal at the lighting control device 110-p indicating a change from non-occupancy to occupancy. As a non-limiting example, the duration of the time window *T_{ad}* may be set to a selected value in a range from a few tenths of a second to a few seconds or even up to one minute.

The above-described analysis for identification of a repeatedly occurring pattern that involves an increase in observed light level that meets the one or more light level criteria and reception of a status indication providing an indication of switching on the light output from a particular other luminaire 120-p taking place within the predefined time window *T_{ad}* and the aspect complementing or reprogramming of the lighting control logic to include a respective second lighting control rule that follows successful identification of a repeatedly occurring pattern of said kind may be carried out separately for a number of other luminaires 120 of the lighting arrangement.

Consequently, the self-adaptation procedure enables the lighting control device 110-k to learn to promptly switch on the light output from the luminaire 120-k as a response to the particular other luminaire 120-p in its proximity detecting an occurrence of a respective triggering condition that results in the other luminaire 120-p switching on its light output, thereby enabling self-adaptation that may result in a set of luminaires 120 that are physically close to each other learning to switch on their respective light outputs in response to detecting an increase in observed light level that meets the one or more predefined light level criteria and any luminaire of the set having detected an occurrence of a respective triggering condition that results in the other luminaire 120-p switching on the light output. As a concrete example in this regard, if the occupancy sensor 142-k of the lighting unit 101-k relatively seldom detects occupancy even though other lighting units 101 nearby detect occupancy (e.g. due to installation, misconfiguration or malfunction of the occupancy sensor 142-k), the self-adaptation procedure results also in the lighting control device 110-k learning to switch on the light output from the luminaire 120-k along with other luminaires 120 in its proximity via application of the second lighting control rule.

In another example, the detected increase in observed light level considered in the analysis and/or pertaining to the second triggering condition may not be the light output of the particular other luminaire 120-p but a light associated with an event that results in an occurrence of a respective triggering condition in the particular other luminaire 120-p and, consequently, causes the particular other luminaire 120-p to switch on its light output. As a practical (but non-limiting) example in this regard, in a scenario where the luminaire 120-k and the particular other luminaire 120-p are provided for illumination of a parking garage or a parking lot, the detected increase in observed light level may originate from headlights of a car entering the area illuminated by the particular other luminaire 120-p. Consequently, provided that the appearance of the light originating from the headlights at the light sensor 141-k at lighting control device 110-k regularly meets the one or more predefined light level criteria, the lighting control device 110-k may consider this as the detected increase in observed light level that meets the one or more predefined light level criteria in context of the self-adaptation procedure and in detection of the second triggering condition.

The self-adaptation procedure may hence result in the second lighting control rule that defines switching on the light output from the luminaire 120-k when receiving an indication of another luminaire 120-p in its proximity switching on its light output and detecting increase in observed light level substantially at the same time (i.e. within the time window *T_{ad}*), thereby taking a preparatory action to account for a scenario where the movement assumingly detected in (the portion of) the space the luminaire 120-p serves to illuminate continues and subsequently results in occupancy in (the portion of) the space the luminaire 120-k serves to illuminate. On the other hand, application of a switch-on profile tailored for such a preparatory action enables a 'softer' ramp-up of illumination and/or illumination at a lower light intensity level (in comparison to the first switch-on profile) that is sufficient for improving user comfort at a reduced additional energy consumption while anticipating the movement to continue to (the portion of) the space the luminaire 120-k serves to illuminate. Moreover, application of a switch-on profile that is different from the first (default) switch-on profile may serve an indication for the other luminaries 120 concerning the luminaire 120-k switching on the light output in response to a triggering condition other than the first triggering condition (which comprises the local occupancy sensor signal indicating a change in the occupancy state from non-occupancy to occupancy).

As an example concerning the difference between the first and second switch-on profiles, we may consider the first switch-on profile as one that defines a first light intensity curve for adjusting the light output from the luminaire 120-k from the stand-by light intensity *I*_{*off*,*k*} to the (first) active light intensity *I_{on,k}* during a first time period (i.e. the respective switch-on period *T_{up,k}*) and the second switch-on profile as one that defines a second light intensity curve for adjusting the light output from the luminaire 120-k from the stand-by light intensity *I_{off,k}* to the (second) active light intensity *I_{on,k}* during a second time period (i.e. the respective switch-on period *T_{up,k}*)*.* Herein, the second switch-on profile may differ from the first switch-on profile in at least one characteristic that pertains to the duration of the switch-on profile and/or to the shape of the light intensity curve defined by the switch-on profile. Non-limiting examples in this regard include the following:
- The second time period may be different from the first time period, the second switch-on profile thereby defining reaching the active light intensity *I_{on,k}* either faster or slower than defined by the first switch-on profile. As a non-limiting example in this regard, the second time period may be longer than the first time period.
- The (second) active light intensity *I_{on,k}* defined for the second switch-on profile may be different from the (first) active light intensity *I_{on,k}* defined for the first switch-on profile, the second switch-on profile thereby defining reaching a lower or higher light intensity than that defined by the first switch-on period and hence defining a light intensity curve having shape different from that defined by first switch-on profile. As a non-limiting example in this regard, the (second) active light intensity *I_{on,k}* defined for the second switch-on profile may be lower than the (first) active light intensity *I_{on,k}* defined for the first switch-on profile.
- The second light intensity curve may involve a different number of changes in the light intensity change rate in comparison to the first light intensity curve, the second switch-on profile thereby defining a light intensity curve having a shape different from that defined by first switch-on profile. As a non-limiting example, the second light intensity curve may involve a higher number of changes in the light intensity change rate than involved in the first light intensity curve.
- The second light intensity curve may define reaching a certain interim light intensity (between the stand-by light intensity *I*_{*off*,*k*} and the active light intensity *I_{on,k}*) either faster or slower than defined by the first light intensity curve, the second switch-on profile thereby defining a light intensity curve having a shape different from that defined by first switch-on profile.
- The second light intensity curve may define keeping the light output at a certain interim light intensity (between the stand-by light intensity *I*_{*off*,*k*} and the active light intensity *I_{on,k}*) either for a longer or shorter period of time than defined by the first light intensity curve, the second switch-on profile thereby defining a light intensity curve having a shape different from that defined by first switch-on profile.

According to an example, one or more characteristics that differentiate the second switch-on profile from the first switch-on profile may be the same or similar regardless of the identity of the particular other luminaire 120-p, the switch-on profile applied by the particular other luminaire 120-p and/or the spatial relationship between the luminaire 120-k and the particular other luminaire 120-p. In other words, for example the difference in the duration between the first and second switch-on profiles and/or the difference in respective shapes of the light intensity curves defined by the first and second switch-on profiles may be the same regardless of the identity of the particular other luminaire 120-p, the switch-on profile applied by the particular other luminaire 120-p and/or the spatial relationship between the luminaire 120-k and the particular other luminaire 120-p. In an example, the (predefined) difference in one or more characteristics that differentiate the second switch-on profile from the first one may be set in view of the one or more light level criteria such that the light level increase according to the second switch-on profile does not meet the one or more light level criteria. Consequently, a further luminaire 120-q observing the increase in light level resulting from the lighting control device 110-k switching on the light output via implementation of the second lighting control rule detects an increase in light level that does not meet the one or more light level criteria, thereby preventing the further luminaire 120-q from adapting its operation in response to the light output of the luminaire 120-k applying the second switch-on profile.

In another example, the extent of difference in respective characteristics of the first and second switch-on profiles may be dependent, for example, on an estimated distance between the luminaire 120-k and the particular other luminaire 120-p. As non-limiting examples in this regard, the extent of difference between the second and first switch-on profiles may increase with increasing distance between the luminaire 120-k and the particular other luminaire 120-p, e.g. such that the difference in duration between the second and first switch-on profiles increases with increasing distance between the luminaires 120-k and 120p and/or such that difference in shape of the light intensity curve between the second and first switch-on profiles (e.g. difference in time that it takes to reach the certain interim light intensity) increases with increasing distance between the luminaires 120-k and 120-p. In an example, the (distance-dependent) difference in one or more characteristics that differentiate the second switch-on profile from the first one may be set in view of the one or more light level criteria, in response to the estimated distance between the luminaries 120-k and 120-p exceeding a predefined distance threshold, such that light level increase according to the second switch-on profile does not meet the one or more light level criteria. Consequently, a further luminaire 120-q observing the increase in light level resulting from the lighting control device 110-k switching on the light output via implementation of the second lighting control rule detects an increase in light level that does not meet the one or more light level criteria, thereby preventing the further luminaire 120-q from adapting its operation in response to the light output of the luminaire 120-k applying the second switch-on profile.

In an example, the estimated distance between the luminaire 120-k and the particular other luminaire 120-p may be derived based on the RSSIs derived for status messages received at (the lighting control device 110-k of) the luminaire 120-k from (the lighting control device 110-p of) the particular other luminaire 120-p, e.g. such that the distance is estimated via a RSSI value derived based on the respective RSSIs derived for status messages received from the luminaire 120-p (e.g. as an average or a median of the RSSIs derived for status messages received from the luminaire 120-p), where decreasing RSSI indicates increasing distance to the luminaire 120-p.

In another example, in a scenario where the communication means is arranged to apply wireless mesh networking, the estimated distance between the luminaire 120-k and the particular other luminaire 120-p may be derived based on respective numbers of intermediate nodes between (the lighting control device 110-k of) the luminaire 120-k and (the lighting control device 110-p of) the luminaire 120-p indicated for respective status messages originating from (the lighting control device 110-p of) the luminaire 120-p, e.g. such that the distance is estimated via a hop count value derived based on the respective hop counts indicated for status messages received from the luminaire 120-p (e.g. as an average or a median of the hop counts indicated for status messages received from the luminaire 120-p), where increasing hop count value indicates increasing distance to the luminaire 120-p.

In addition to the difference between the first and second switch-on profiles described in the foregoing, additionally or alternatively, the second switch-on profile is different from a switch-on profile applied by the particular other luminaire 120-p, referred to in the following as a remote switch-on profile due to its application in another luminaire 120. The difference between the second switch-on profile and the remote switch-on profile concerns at least one characteristic that pertains to the to the duration of the switch-on profile and/or to the shape of the light intensity curve defined by the switch-on profile. As an example, the at least one characteristic of the remote switch-on profile may be derived or estimated based on a light level curve captured in the local light sensor signal in the lighting control device 110-k at a time period during which the particular other luminaire 120-p applies the remote switch-on profile. The relationship between the light intensity curve that may be captured based on the local light sensor signal at the lighting control device 110-k and a switch-on profile applied in another luminaire 120 of the lighting arrangement 100 is described in the foregoing.

The examples pertaining to the differences between the second and first switch-on profiles described in the foregoing apply to the difference between the second switch-on profile and the remote switch on profile as well, *mutatis mutandis.* Hence, according to non-limiting examples, the difference may pertain to the duration of the switch-on profile (e.g. the second switch-on profile may define reaching the active light intensity *I_{on,k}* either faster or slower than defined by the remote switch-on profile), to the active light intensity *I_{on,k}* defined for the switch-on profile (e.g. the second switch-on profile may define an active light intensity *I_{on,k}* that is either lower or higher than defined by the remote switch-on profile), to the number of changes in the light intensity change rate (e.g. the second switch-on profile may define either a higher or lower number of changes in the light intensity change rate than defined by the remote switch-on profile) and/or to the time period of keeping the light output at a certain interim light intensity (e.g. e.g. the second switch-on profile may define keeping the light output at the certain interim light intensity for either a longer or shorter period of time than defined by the remote switch-on profile). Moreover, the extent of difference between the at least one characteristic of the second and remote switch-on profiles may be a predefined one or it may depend on the estimated distance between the luminaire 120-k and the particular other luminaire 120-p, where the distance between the luminaries 120-k and 120-p may be estimated as described in the foregoing.

In case of applying a predefined difference between the at least one characteristic of the second and remote switch-on profiles, the difference in the at least one characteristic of the second switch-on profile in comparison to the remote switch-on profile may be set in view of the one or more light level criteria, for example, such that increase in light level according to the second switch-on profile does not meet the one or more light level criteria. Consequently, a further luminaire 120-q observing the increase in light level resulting from the lighting control device 110-k switching on the light output via implementation of the second lighting control rule detects an increase in light level that does not meet the one or more light level criteria, thereby preventing the further luminaire 120-q from adapting its operation in response to the light output of the luminaire 120-k applying the second switch-on profile. In another example in this regard, the difference in the at least one characteristic of the second switch-on profile in comparison to the remote switch-on profile may be set in view of the one or more light level criteria such that repeated introduction the predefined difference to the remote switch-on profile Q or more times (where Q is a predefined number that is greater than or equal to two) results in an increase in light level that does not meet the one or more light level criteria, thereby limiting iterative modification of the switch-on profile to pass through at most Q intermediate luminaires 120 before resulting in light level increase that does not meet the one or more light level criteria.

The one or more light level criteria applied in the analysis for identification of a repeatedly occurring pattern pertaining to the particular other luminaire 120-p and subsequent detection of an occurrence of the second triggering condition may comprise, for example, one or more of the following requirements:
- The increase in the observed light level may be required to exceed a specified change threshold *ΔL_{thr,k.}* In other words, the identification of the repeatedly occurring pattern and/or subsequent detection of the second triggering condition may take into account only those occasions of increasing light level that result in a non-negligible increase in observed light level. In an example, the change threshold *ΔL_{thr,k}* comprises a predefined (e.g. fixed) value, whereas in another example the change threshold *ΔL_{thr,k}* comprises an adaptive value. The change threshold *ΔL_{thr,k}* may be defined as an absolute value (e.g. a predefined increase in Ix), whereas it may be advantageous to define the change threshold *ΔL_{thr,k}* as a relative value (e.g. a predefined percentage) for more generic applicability. As an example, adaptation of the change threshold *ΔL_{thr,k}* may comprise adapting the change threshold *ΔL_{thr,k}* in dependence of the estimated distance between the luminaire 120-k and the particular other luminaire 120-p e.g. such that the change threshold *ΔL_{thr,k}* is decreased with increasing (estimated) distance between the luminaires 120-k and 120-p. In another example, additionally or alternatively, adaptation of the change threshold *ΔL_{thr,k}* may comprise the lighting control device 110-k using, before carrying out the self-adaptation procedure, the light sensor 141-k to measure the minimum and maximum observed light levels (e.g. over a time period having a duration from several hours to several days) and defining the change threshold *ΔL_{thr,k}* as a predefined percentage of the difference between the maximum and minimum observed light levels, thereby adapting the change threshold *ΔL_{thr,k}* in view of the expected variation in observed light levels in the operating environment of the luminaire 120-k over different lighting conditions. In a variation of this example, the maximum and minimum of the observed light levels may be measured over a (sub-)period of time during which the light output from the luminaires 120 of the lighting arrangement 100 remains unchanged (e.g. such that the light output from the luminaire 120-k is off or at the respective stand-by light intensity *I*_{*off*,*k*} and the light output from one or more other luminaires 120 is on), thereby adapting the change threshold *ΔL_{thr,k}* in view of the variation in the light sensor signal during (substantially) stable lighting conditions. In a further example, the lighting control device 110-k may use the light sensor 141-k to measure, before carrying out the self-adaptation procedure, a first observed light level that indicates light level when the light output from the luminaire 120-k is switched on and a second light level when the light output from the luminaire 120-k is switched off (or adjusted to the respective stand-by light intensity *I*_{*off*,*k*}) and define the change threshold *ΔL_{thr,k}* as a predefined percentage of the difference between the first and second observed light levels, thereby adapting the change threshold *ΔL_{thr,k}* in view of the increase in light level provided by the luminaire 120-k. Consequently, the change threshold *ΔL_{thr,k}* may depend on one or more factors that relate to characteristics of the light sensor 141-k, characteristics of the luminaire 120-k and/or characteristics of the other luminaires 120 of the lighting arrangement 100 and, consequently, may result in a change threshold value that corresponds to a change in a range from a few Ix to more than 100 Ix, whereas a typical threshold value may correspond to a change in a range of a few tens of Ix.
- The increase in the observed light level may be required to occur within a predefined time period *T_{inc}* (where *T_{inc}* < *T_{ad}).* The time period *T_{inc}* typically comprises a predefined time period selected from a range from a few tenths of a second to a few seconds, whereas in some examples the time period may be up to a few tens of seconds or even up to one minute. Consequently, the identification of the repeatedly occurring pattern and/or subsequent detection of the second triggering condition may take into account only those occasions of increasing light level that take place fast enough.
- The observed light level (after the observed increase) may be required to exceed a predefined light level threshold *L_{thr,k}.* As an example, the light level threshold *Lₜₕᵣ,ₖ* may comprise a suitable value selected from a range from a few Ix to 150 Ix, e.g. a value selected from a range from 30 to 50 Ix, e.g. 40 Ix. Consequently, the identification of the repeatedly occurring pattern and/or subsequent detection of the second triggering condition may take into account only those occasions of increasing light level that result in a non-negligible observed light level may be identified in the analysis.

In an example, one or more of the requirements described in the examples above may be applied to define respective characteristics of the detected increase in observed light level at the lighting control device 110-k such that they define a match with or a maximum allowable margin to a reference light level curve corresponding to a predefined reference switch-on profile. As an example, the reference switch-on profile may comprise the first (default) switch-on profile. In this regard, one or more of the change threshold *ΔLₜₕᵣ,ₖ,* the light level threshold *Lₜₕᵣ,ₖ* or the time period *T_{inc}* may be set to a respective value that defines a match to or a maximum allowable deviation from a corresponding characteristic of the reference light level curve. The relationship between the light intensity curve that may be captured based on the local light sensor signal at the lighting control device 110-k and a switch-on profile applied in another luminaire 120 of the lighting arrangement 100 is described in the foregoing.

The analysis for identification of a repeatedly occurring pattern pertaining to the particular other luminaire 120-p and subsequent detection of an occurrence of the second triggering condition may impose, for example, one or more of the following requirements for detection of an applicable status indication that indicates switching on the light output from the luminaire 120-p:
- A received status indication under consideration may be required to have been received in a status indication message having a received signal strength indication (RSSI) that exceeds a signal strength threshold. In an example, the signal strength threshold comprises a predefined threshold. In another example, the signal strength threshold comprises an adaptive threshold defined based on RSSIs of previously received status indications messages, e.g. as a predefined percentage of a maximum RSSI among previously received status indication messages, for example 10 % or another value selected from a range from 5 to 20 %. Consequently, only those other luminaires that are sufficiently close to the luminaire 120-k may be considered in the analysis.
- In case the wireless communication between the luminaires of the lighting arrangement 100 is provided by a wireless mesh network, the number of hops between the lighting control device 110-k and the lighting control device 110-p of the particular other luminaire 120-p may be required to be smaller than a predefined hop threshold. In other words, the number of nodes via which the status indication message that conveys the status indication under consideration have been received may be required to be smaller than the predefined hop threshold. The number of hops between the lighting control device 110-k and the lighting control device 110-p of the particular other luminaire 120-p may be derived, for example, based on information included in one or more packets that carry the status indication message conveying the status indication under consideration. Consequently, only those other luminaires that are sufficiently close to the luminaire 120-k may be considered in the analysis.
- In case the luminaire 120-k belongs to the luminaire group 130-m, the particular other luminaire 120-p may be required to be one that does not belong to the luminaire group 130-m, in other words the particular other luminaire 120-p may be required to belong to another luminaire group or required not to belong to any luminaire group. Consequently, only those other luminaires that are not in the same luminaire group 130-m with the luminaire 120-k may be considered in the analysis while the luminaires in the same luminaire group 130-m with the luminaire 120-k may be excluded from the analysis (since the lighting control device 110-k is anyway configured to switch on the light output from the luminaire 120-k in response to receiving a status indication that indicates another luminaire of the same luminaire group 130-m having switched on its light output).

The one or more occurrence criteria applied in the analysis for identification of a repeatedly occurring pattern pertaining to the particular other luminaire 120-n may comprise, for example, one or more of the following requirements:
- The pattern that involves an increase in observed light level and reception of a status indication under consideration taking place within the time window *T_{ad}* may be required to have occurred at least a predefined number of times.
- At least a predetermined percentage of occurrences of a status indication under consideration may be required to be accompanied by an increase in observed light level within the predefined time window *T_{ad}*.

As described in the foregoing, adjusting the light output of the luminaire 120-k to the stand-by light intensity *I*_{*off*,*k*} may be carried out in accordance with a switch-off profile that defines at least the switch-off period *T_{dn,k}* for adjusting the light intensity from the target light intensity *I_{tgt,k}* to the stand-by light intensity *I*_{*off*,*k*} and a light intensity curve that defines the light intensity as a function of time over the switch-off period *T_{dn,k}*. In other words, a switch-off profile may define the manner of adjusting the light output from the luminaire 120-k from the target light intensity *I_{tgt,k}* to the stand-by light intensity *I_{off,k}.* A switch-off profile may be defined in a manner similar to that described in the foregoing for a switch-on profile, *mutatis mutandis,* with the exception that instead of defining a light intensity curve for increasing the light intensity, a switch-off profile defines a light intensity curve for decreasing the light intensity.

In an example, a switch-off profile defines the light intensity curve by the target light intensity *I_{tgt,k}* and the stand-by light intensity *I_{off},ₖ*, thereby providing a linear or substantially linear light intensity curve that defines linear or substantially linear decrease from the target light intensity *I_{tgt,k}* at the beginning of the switch-off period *T_{dn,k}* to the stand-by light intensity *I*_{*off*,*k*} at the end of the switch-off period *T_{dn,k},* as schematically illustrated in Figure 4A. The switch-off period *T_{dn,k}* may be set to a suitable value selected, for example, from a range from 0 to 1200 seconds, e.g. 300 seconds.

In the above example, the switch-off period *T_{dn,k},* together with the target light intensity *I_{tgt,k}* and the stand-by light intensity *I_{off,k},* hence (implicitly) defines a light intensity change rate *r_{dn,k}* for the luminaire 120-k according to the respective switch-off profile. Herein, the light intensity change rate *T_{dn,k}* may be derived, for example, as *T_{dn,k}* = *(I_{off},ₖ* - *I_{tgt,k})*/*T_{dn,k}.* In a variation of the above example, instead of explicitly defining the switch-off period *T_{dn,k},* a switch-off profile may define the light intensity change rate *r_{dn},ₖ* e.g. as an amount of decrease in light intensity per time unit. Consequently, together with the target light intensity *I_{tgt,k}* and the stand-by light intensity *I*_{*off*,*k*} the light intensity change rate *T_{dn,k}* (implicitly) defines the switch-on period *T_{dn,k}* involved in decreasing the light intensity of the luminaire 120-k from the target light intensity *I_{tgt,k}* to the stand-by light intensity *I*_{*off*,*k*} in accordance with the respective switch-on profile, e.g. as *T_{dn,k}* = (*I_{tgt,k}* - *I_{off,k})*/*r_{dn,k}.*

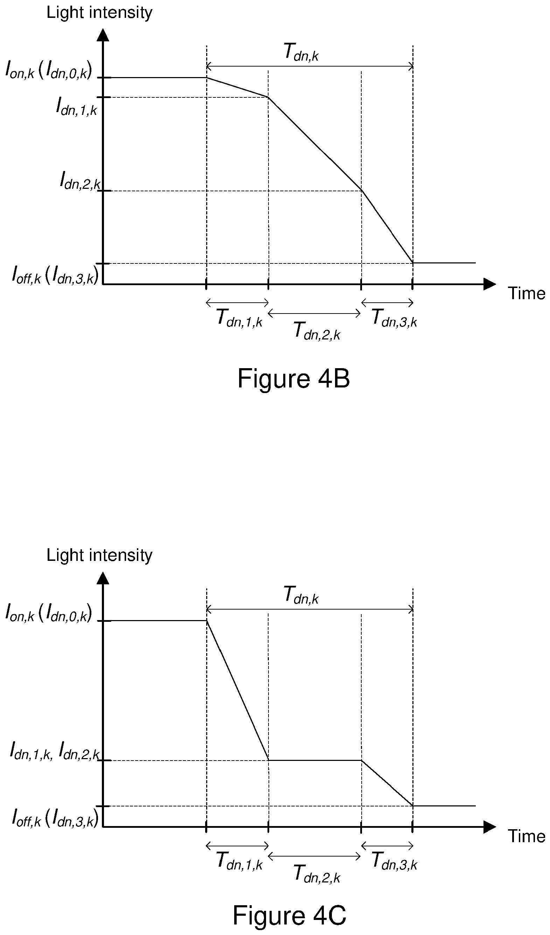

Along the lines described in the foregoing for switch-on profiles, in another example a switch-off profile may further define the light intensity curve via one or more ramp-down light intensities *I_{dn,j,k}* together with their respective timing within the switch-off period *T_{dn,k},* thereby defining two or more sub-periods of the switch-off period *T_{dn,k}* that may be referred to respective (time) segments of the switch-off period *T_{dn,k}.* Such definition of a switch-off profile, at least conceptually, provide a piecewise linear or substantially piecewise linear light intensity curve that defines piecewise linear or substantially piecewise linear decrease from the target light intensity *I_{tgt,k}* at the beginning of the switch-off period *T_{dn,k}* to the stand-by light intensity *I_{off,k}* at the end of the switch-off period *T_{dn},ₖ.* The timing may be defined e.g. with respect to the beginning of the switch-off period *T_{dn,k},* with respect to the end of the switch-off period *T_{dn,k}* and/or with respect to an adjacent (time) segment of the switch-off period *T_{dn},ₖ*. In the following, the timing of each (time) segment of the switch-off period *T_{dn,k}* is defined as a respective ramp-down period *T_{dn,j,k}* that sum up to the switch-off period *T_{dn,k},* e.g. such that Σ*ⱼ T_{dn,j,k}* = *T_{dn},ₖ.* Each of the ramp-down light intensities *I_{dn,j,k}* may be set to a respective value (e.g. a respective percentage of the maximum light intensity of the at least one light source 121-k) between the stand-by light intensity *I*_{*off*,*k*} and the target light intensity *I_{tgt,k},* i.e. *I_{off,k} ≤ I_{dn,j,k} ≤ I_{tgt,k}.* Each (time) segment *T_{dn,j,k}* of the switch-off period *T_{dn,k},* together with the light intensity *I*_{*dn,j-*1*,k*} at the beginning of the (time) segment *T_{dn,j,k}* and the light intensity *I_{dn,j,k}* at the end of the time segment *T_{dn,j,k},* define a light intensity change rate *r_{dn,j,k}* for the respective (time) segment *T*_{*dn,j*,*k*}. Figures 4B and 4C schematically illustrate respective examples of light intensity curves defined via respective one or more ramp-down light intensities *I_{dn,j,k}.*

Along the lines described for switch-on profiles, switch-off provides according to the above examples define a change in light intensity over time via a light intensity curve that is defined by two or more data points in the time-light intensity plane, thereby defining a linear or piecewise linear decrease in light intensity over time. In a general case, the light intensity over the switch-off period *T_{dn,k}* may be defined as a (decreasing) function of time *I*_{*dn*,*k*} (t) and the light intensity change rate over the switch-off period *T_{dn,k}* may be defined as a first derivative of that function, e.g. as *r_{dn,k}*(*t*) = *dI_{dn,j,k}*(*t*)/*dt,* which does not necessarily exhibit any (piecewise) linearity.

As an example in this regard, parameters of a switch-off profile may be defined such that it provides adjustment of the light output of the luminaire 120-k to the stand-by light intensity *I*_{*off*,*k*} via the intermediate light intensity *I_{int,k}* in accordance with the respective delay periods *T_{off,k}* and *T_{dim,k}* (as described in the foregoing) or in accordance of a desired variation thereof e.g. via suitable selection of the ramp-down periods *T_{dn,j,k}* and respective ramp-down light intensities *I_{dn,j,k}.*

Along the lines described in the foregoing, the lighting control logic may define a plurality of (preprogrammed) lighting control rules. In this regard, for the purpose of an example concerning an aspect of the self-adaptation procedure in the adaptation means in the lighting control device 110-k, we may assume that the lighting control logic comprises a third lighting control rule that defines adjusting the light output from the luminaire 120-k to the stand-by light intensity *I*_{*off*,*k*} in accordance with a first switch-off profile as a response to a third triggering condition that comprises the local occupancy sensor signal indicating a change in the occupancy state from occupancy to non-occupancy. The first switch-off profile may be also referred to as a default switch-off profile.

According to an example, successful identification of a repeatedly occurring pattern of the kind described above may further result in the adaptation means defining a fourth lighting control rule that defines adjusting the light output from the luminaire 120-k (from the target light intensity *I_{tgt,k}*) to the stand-by light intensity *I*_{*off*,*k*} in accordance with a second switch-off profile as a response to a non-occurrence (i.e. lack of occurrence) of the first triggering condition within a second predefined time window *T_{wait}* following switching on the light output from the luminaire 120-k in response to an occurrence of the second triggering condition. Herein, the second switch-off profile is different from the first switch-off profile.

As an example concerning the difference between the second and first switch-off profiles, we may consider the first switch-off profile as one that defines a first light intensity curve for adjusting the light output from the luminaire 120-k from the target light intensity *I_{tgt,k}* to the stand-by light intensity *I*_{*off*,*k*} during a first time period (i.e. the respective switch-off period *T*_{*dn*,*k*}) and the second switch-off profile as one that defines a second light intensity curve for adjusting the light output from the luminaire 120-k from the target light intensity *I_{tgt,k}* to the stand-by light intensity *I*_{*off*,*k*} during a second time period (i.e. the respective switch-off period *T*_{*dn*,*k*}). Herein, the second switch-off profile may differ from the first switch-off profile in at least one characteristic that pertains to the duration of the switch-off profile and/or to the shape of the light intensity curve defined by the switch-off profile. Non-limiting examples in this regard include the following:
- The second time period may be different from the first time period, the second switch-off profile thereby defining reaching the stand-by light intensity *I*_{*off*,*k*} faster or slower than defined by the first switch-off profile. As a non-limiting example in this regard, the second time period may be shorter than the first time period.
- The second light intensity curve may involve a different number of changes in the light intensity change rate in comparison to the first light intensity curve, the second switch-off profile thereby defining light intensity curve having shape different from that defined by first switch-off profile. As a non-limiting example, the second light intensity curve may involve a higher number of changes in the light intensity change rate than involved in the first light intensity curve.
- The second light intensity curve may define reaching a certain interim light intensity (between the target light intensity *I_{tgt,k}* and the stand-by light intensity *I_{off,k}*) either faster or slower than defined by the first light intensity curve, the second switch-off profile thereby defining light intensity curve having shape different from that defined by first switch-on profile.
- The second light intensity curve may define keeping the light output at a certain interim light intensity (between the target light intensity *I_{tgt,k}* and the stand-by light intensity *I_{off,k}*) either for a longer or shorter period of time than defined by the first light intensity curve, the second switch-off profile thereby defining light intensity curve having shape different from that defined by first switch-off profile.

As an example, the second switch-off profile may define reaching the stand-by light intensity *I*_{*off*,*k*} or the interim light intensity faster than defined by the first switch-off profile to account for a scenario where the movement that resulted in the occurrence of the second triggering condition (and resulted in switching on the light output from the luminaire 120-k) does not continue to (the portion of) the space the luminaire 120-k serves to illuminate, thereby reducing the light output from the luminaire 120-k faster than in a scenario where the light output therefrom has been switched on in response to the first triggering condition. Moreover, application of a switch-off profile that is different from the first (default) switch-off profile may serve to convey information related to the identity of the luminaire 120-k and/or information about current operating characteristic(s) of the luminaire 120-k to those ones of the other luminaires 120 whose respective light sensors 141 are able to see the light output of the luminaire 120-k.

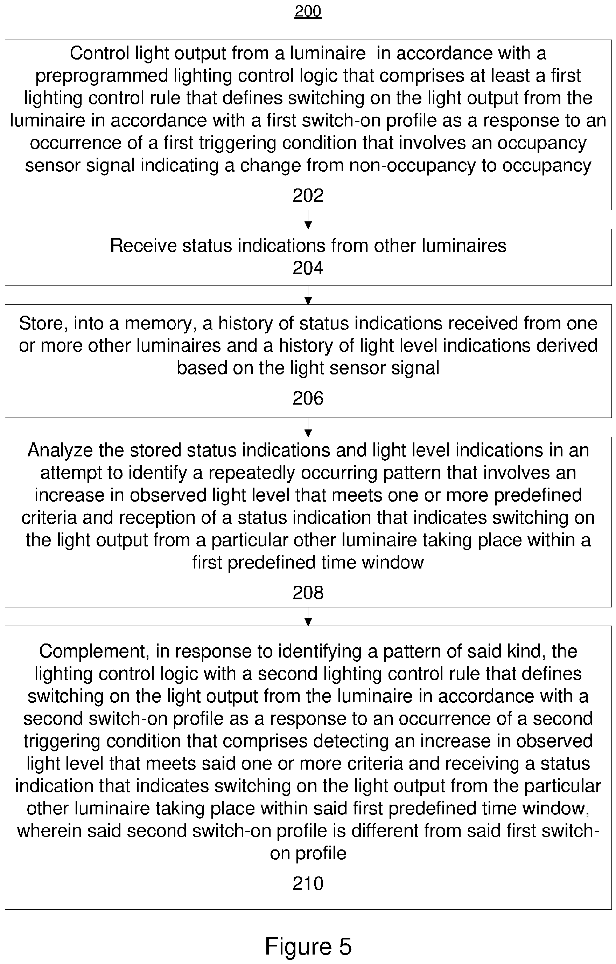

Some of the operations described in the foregoing with references to the lighting control device 110-k may be also defined as steps of a method. As an example in this regard, Figure 5 depicts a flowchart that illustrates a method 200 for controlling light output from the luminaire 120-k based at least on an occupancy sensor signal that is indicative of a current occupancy status in a space illuminated by the luminaire 120-k and on a light sensor signal that is indicative of currently observed light level in said space. The operations described with references to blocks 202 to 210 pertaining to the method 200 may be varied or complemented in a number of ways, for example as described in the foregoing and/or in the following with references to the lighting control device 110-k and/or to the luminaire 120-k.

The method 200 commences from controlling the light output from the luminaire 120-k in accordance with the preprogrammed lighting control logic that comprises at least a first lighting control rule that defines switching on the light output from the luminaire 120-k in accordance with a first switch-on profile as a response to an occurrence of a first triggering condition that involves an occupancy sensor signal indicating a change from non-occupancy to occupancy, as indicated in block 202. The method 200 further comprises receiving the status indications from other luminaires 120, as indicated in block 204, and adjusting and/or complementing the lighting control logic during operation of the luminaire 120-k

The adjustment in context of the method 200 comprises storing, into the memory (of the lighting control device 110-k), a history of status indications received from one or more other luminaires and a history of light level indications derived based on the light sensor signal, as indicated in block 206. The adjustment further comprises analyzing the stored status indications and light level indications in an attempt to identify a repeatedly occurring pattern that involves an increase in observed light level that meets one or more predefined light level criteria and reception of a status indication that indicates switching on the light output from a particular other luminaire 120-p taking place within a predefined time window *T_{ad}*, as indicated in block 208.

The adjustment further comprises complementing, in response to identifying a pattern of said kind, the lighting control logic with a second lighting control rule that defines switching on the light output from the luminaire 120-k in accordance with a second switch-on profile as a response to detecting an occurrence of a second triggering condition that comprise detecting an increase in observed light level that meets said one or more light level criteria and receiving a status indication that indicates switching on the light output from the particular other luminaire 120-p taking place with the predefined time window *T_{ad}*, wherein the second switch-on profile is different from the first switch-on profile, as indicated in block 210.

In the examples described in the foregoing, usage of the second switch-on profile that is different from the first (default) switch-on profile serves to convey information about current operating characteristic(s) of the luminaire 120-k to those ones of the other luminaires 120 whose respective light sensors 141 are able to see the light output of the luminaire 120-k. In other examples, application of a certain switch-on profile or a switch-on profile having certain characteristics when switching on the light output from the luminaire 120-k may be, alternatively or additionally, applied to convey information about the identity of the luminaire 120-k to those ones of the other luminaires 120 whose respective light sensors 141 are able to see the light output of the luminaire 120-k.

In an example in this regard, the first (default) switch-on profile defined for the first lighting control rule or, in general, any switch-on profile defined for any given lighting control rule in the lighting control device 110-k may be selected from a plurality of predefined switch-on profiles available therein (and in the respective lighting control devices 110 of the other luminaries 120 of the lighting arrangement 100). The selection of a switch-on profile for the given lighting control rule may be carried out, for example, upon manufacturing, installation and/or maintenance of the lighting control device 110-k and/or the luminaire 120-k. In an example, the selection of the switch-on profile for the given lighting control rule may be carried out again e.g. according to a predefined schedule (e.g. at predefined time intervals), thereby resulting in reselection of the switch-on profile defined for the given lighting control rule. In case the switch-on profile defined for a given lighting control rule in the lighting control device 110-k is selected from a plurality of available switch-on profiles, the lighting control device 110-k may provide an information that indicates the selection of the switch-on profile to other luminaires 120. This aspect is described via a more detailed example in the following.

In case the switch-on profile for a given lighting control rule in the lighting device 110-k is one selected from a plurality of switch-on profiles available therein (and in the other lighting control devices 110 of the lighting arrangement 100), the lighting control device 110-k may be arranged to provide the other luminaires 120 of the lighting arrangement 100 with information that identifies the switch-on profile applied by the lighting control device 110-k defined for the respective lighting control rule. As an example, the lighting control device 110-k may be arranged to transmit, via the communication means therein, one or more status messages that comprise a respective profile indication that identifies a switch-on profile defined for a respective lighting control rule that involves switching on the light output from the luminaire 120-k. In this regard, the lighting control device 110-k may be arranged to transmit a profile indication that identifies the switch-on profile to be applied by the lighting control device 110-k when switching on the light output of the luminaire 120-k in accordance with a lighting control rule that comprises a triggering condition that involves the local occupancy sensor signal therein indicating a change from non-occupancy to occupancy. The switch-on profile defined for such a triggering condition may be designated as a default switch-on profile (of the luminaire 120-k).

The profile indication may, for example, identify one of the plurality of predefined switch-on profiles that are available in the lighting control device 110-k (and in the other lighting control devices 110) as the one to be applied when switching on the light output from the luminaire 120-k in accordance with the respective lighting control rule. The profile indication may be transmitted from the lighting control device 110-k, for example, according to a predefined schedule (e.g. at regular intervals), each time the switch-on profile for the respective lighting control rule is (re)selected and/or each time an occurrence of the triggering condition defined for the respective lighting control rule is detected. Conversely, the lighting control device 110-k may receive, via the communication means, respective profile indications from (respective lighting control devices 110 of) the other luminaires 120 of the lighting arrangement 100.

While the above examples describe usage of switch-on profiles to convey information related to the identity of the luminaire 120-k via application of a given switch-on profile in context of a given lighting control rule, in other example such identity information may be, alternatively or additionally, conveyed via application of a given switch-off profile in context of a given lighting control rule.

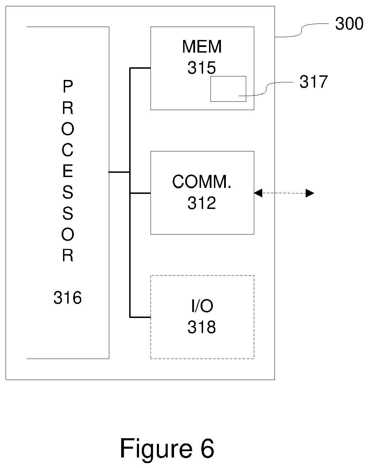

Figure 6 illustrates a block diagram of some components of an exemplifying apparatus 300. The apparatus 300 may comprise further components, elements or portions that are not depicted in Figure 6. The apparatus 300 may be referred to as a computing apparatus and it may be employed e.g. in implementing one or more components of the lighting control device 110-k.

The apparatus 400 comprises a processor 316 and a memory 315 for storing data and computer program code 317. The memory 315 and a portion of the computer program code 317 stored therein may be further arranged to, with the processor 316, to implement at least some of the operations, procedures and/or functions described in the foregoing in context of the lighting control device 110-k.

The apparatus 300 comprises a communication portion 312 for communication with other devices. The communication portion 312 comprises at least one communication apparatus that enables wired or wireless communication with other apparatuses. A communication apparatus of the communication portion 312 may also be referred to as a respective communication means.

The apparatus 300 may, optionally, further comprise one or more user I/O (input/output) components 318 that may be arranged, possibly together with the processor 316 and a portion of the computer program code 317, to provide a user interface for receiving input from a user of the apparatus 300 and/or providing output to the user of the apparatus 300 to control at least some aspects of operation of the lighting control device 110-k implemented by the apparatus 300. The user I/O components 318 may comprise hardware components such as a display, a touchscreen, a touchpad, an arrangement of one or more keys or buttons, etc. The user I/O components 318 may be also referred to as peripherals. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent/ dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some of the operations, procedures and/or functions described in the foregoing in context of the lighting control device 110-k.

Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some of the operations, procedures and/or functions described in the foregoing in context of the lighting control device 110-k.

The computer programs stored in the memory 315 may be provided e.g. as a respective computer program product comprising at least one computer-readable non-transitory medium having the computer program code 317 stored thereon, the computer program code, when executed by the apparatus 400, causes the apparatus 300 at least to perform at least some of the operations, procedures and/or functions described in the foregoing in context of the lighting control device 110-k. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc.

## Claims

1. A lighting control device (110-k) for controlling light output from a luminaire (120-k) based at least on an occupancy sensor signal that is indicative of a current occupancy status in a space illuminated by the luminaire (120-k) and on a light sensor signal that is indicative of currently observed light level in said space, the lighting control device (110-k) comprising:
a control means for controlling light output from the luminaire (120-k) in accordance with a lighting control logic comprising at least a first lighting control rule that defines switching on the light output from the luminaire (120-k) in accordance with a first switch-on profile as a response to an occurrence of a first triggering condition that involves the occupancy sensor signal indicating a change from non-occupancy to occupancy;
a communication means for wireless communication with other lighting control devices (110) that serve to control other luminaires (120), the communication means arranged to receive status indications from the other lighting control devices (110); and
an adaptation means for adjusting the lighting control logic during operation of the lighting control device (110-k) via analysis of a history of status indications received from one or more other lighting control devices,
**characterized in that** the adaptation means is arranged to:
store, into a memory, the history of status indications received from the one or more other lighting control devices and a history of light level indications derived based on the light sensor signal,
analyze the stored status indications and light level indications in an attempt to identify a repeatedly occurring pattern that involves an increase in observed light level that meets one or more predefined criteria and reception of a status indication that indicates switching on the light output from a particular other luminaire (120-p) taking place within a first predefined time window, and
reprogram, in response to identifying said repeatedly occurring pattern, the lighting control logic by introducing a second lighting control rule that defines switching on the light output from the luminaire (120-k) in accordance with a second switch-on profile as a response to an occurrence of a second triggering condition that comprises detecting an increase in observed light level that meets said one or more criteria and receiving a status indication that indicates switching on the light output from the particular other luminaire (120-p) taking place within said first predefined time window, wherein said second switch-on profile is different from said first switch-on profile.

2. A lighting control device (110-k) according to claim 1, wherein
the first switch-on profile defines a first light intensity curve for adjusting the light output of the luminaire (120-k) from a stand-by light intensity to a target light intensity during a first time period, wherein the first light intensity curve defines the light intensity as a function of time over the first time period, and
the second switch-on profile defines a second light intensity curve for adjusting the light output of the luminaire (120-k) from the stand-by light intensity to the target light intensity during a second time period, wherein the second light intensity curve defines the light intensity as a function of time over the second time period.

3. A lighting control device (110-k) according to claim 2, wherein one or more of the following applies:
the second time period is different in duration from the first time period,
the second light intensity curve has a shape different from that of the first light intensity curve.

4. A lighting control device (110-k) according to claim 2 or 3, wherein second time period is longer than the first time period.

5. A lighting control device (110-k) according to any of claims 2 to 4, wherein the second light intensity curve defines reaching a predefined interim light intensity level between the stand-by light intensity and the target light intensity slower than defined by the first light intensity curve.

6. A lighting control device (110-k) according to any of claims 2 to 4, wherein the second light intensity curve defines keeping a predefined interim light intensity level between the stand-by light intensity and the target light intensity for a longer period of time than defined by the first light intensity curve.

7. A lighting control device (110-k) according to any of claims 1 to 6, wherein the adaptation means is further arranged to:
estimate a distance between the luminaire (120-k) and the particular other luminaire (120-p), and
define the second switch-on profile such that the difference between the second and first switch-on profiles increases with increasing distance between the luminaire (120-k) and the particular other luminaire (120-p).

8. A lighting control device (110-k) according to claim 7, wherein the adaptation means is arranged to estimate the distance between the luminaire (120-k) and the particular other luminaire (120-p) based on received signal strength indications, RSSIs, derived for status messages received from the particular other luminaire (120-p).

9. A lighting control device (110-k) according to claim 7, wherein the communication means is arranged to apply a wireless mesh networking and wherein the adaptation means is arranged to estimate the distance between the luminaire (120-k) and the particular other luminaire (120-p) based on respective numbers of intermediate nodes between the luminaire (120-k) and the particular other luminaire (120-p) indicated for respective status messages originating from the particular other luminaire (120-p).

10. A lighting control device (110-k) according to any of claims 1 to 9, wherein said one or more criteria comprise one or more of the following:
the increase in observed light level exceeds a change threshold,
the increase in observed light level results in a light level the exceeds a predefined light level threshold,
the increase in observed light level occurs within a second predefined time window.

11. A lighting control device (110-k) according to any of claims 1 to 10, wherein a pattern that involves an increase in observed light level and reception of a status indication that indicates switching on the light output from a particular other luminaire (120-p) taking place within a predefined time window is considered as a repeatedly occurring one in response to one or both of the following:
said pattern having occurred at least a predefined number of times,
at least a predefined percentage of receptions of said status indication having been accompanied by an increase in observed light level within the predefined time window.

12. A lighting control device (110-k) according to any of claims 1 to 11, wherein
the lighting control logic comprises a third lighting control rule that defines adjusting the light output from the luminaire (120-k) to a stand-by light intensity in accordance with a first switch-off profile as a response to an occurrence of a third triggering condition that involves the occupancy sensor signal indicating a change from occupancy to non-occupancy; and
the adaptation means is arranged to reprogram, in response to identifying said repeatedly occurring pattern, the lighting control logic to include a fourth lighting control rule that defines adjusting the light output from the luminaire (120-k) to the stand-by light intensity in accordance with a second switch-off profile as a response to a non-occurrence of said first triggering condition within a second predefined time window following switching on the light output from the luminaire (120-k) in response to an occurrence of said second triggering condition, wherein said second switch-off profile is different from said first switch-off profile.

13. A lighting control device (110-k) according to claim 12,
wherein the first switch-off profile defines a third light intensity curve for adjusting the light output of the luminaire (120-k) from a target light intensity to a stand-by light intensity during a third time period, wherein the third light intensity curve defines the light intensity as a function of time over the third time period, and
wherein the first switch-off profile defines a fourth light intensity curve for adjusting the light output of the luminaire (120-k) from the target light intensity to the stand-by light intensity during a fourth time period, wherein the fourth light intensity curve defines the light intensity as a function of time over the fourth time period,
wherein one or more of the following applies:
the fourth time period is different in duration from the third time period,
the fourth light intensity curve has a shape different from that of the third light intensity curve.

14. A method (200) for controlling light output from a luminaire (120-k) based at least on an occupancy sensor signal that is indicative of a current occupancy status in a space illuminated by the luminaire (120-k) and on a light sensor signal that is indicative of currently observed light level in said space, the method (200) comprising:
controlling (202) light output from the luminaire (120-k) in accordance with a lighting control logic comprising at least a first lighting control rule that defines switching on the light output from the luminaire (120-k) in accordance with a first switch-on profile as a response to an occurrence of a first triggering condition that involves the occupancy sensor signal indicating a change from non-occupancy to occupancy;
receiving (204) status indications from other luminaires (120); and
adjusting the lighting control logic during operation of the luminaire (120-k) via analysis of a history of status indications received from one or more other lighting control devices,
**characterized in that** said adjusting comprises:
storing (206), into a memory, the history of status indications received from the one or more other lighting control devices and a history of light level indications derived based on the light sensor signal,
analyzing (208) the stored status indications and light level indications in an attempt to identify a repeatedly occurring pattern that involves an increase in observed light level that meets one or more predefined criteria and reception of a status indication that indicates switching on the light output from a particular other luminaire (120-p) taking place within a first predefined time window, and
reprogramming (210), in response to identifying a pattern of said kind, the preprogrammed lighting control logic by introducing a second lighting control rule that defines switching on the light output from the luminaire (120-k) in accordance with a second switch-on profile as a response to an occurrence of a second triggering condition that comprises detecting an increase in observed light level that meets said one or more criteria and receiving a status indication that indicates switching on the light output from the particular other luminaire (120-p) taking place within said first predefined time window, wherein said second switch-on profile is different from said first switch-on profile.

15. A computer program (317) for controlling light output from a luminaire (120-k), the computer program (317) comprising computer readable program code configured to cause performing at least the method according to claim 14 when said program code is executed on one or more computing apparatuses (300) operatively coupled to the luminaire for controlling the light output and operatively coupled to said other luminaires for receiving said status indications.

## Patentansprüche

1. Beleuchtungssteuereinrichtung (110-k) zum Steuern einer Lichtausgabe von einer Leuchte (120-k) auf Basis mindestens eines Belegungssensorsignals, das einen aktuellen Belegungsstatus in einem durch die Leuchte (120-k) beleuchteten Raum anzeigt, und auf einem Lichtsensorsignal, das ein aktuell beobachtetes Lichtniveau in dem Raum anzeigt, wobei die Beleuchtungssteuereinrichtung (110-k) umfasst:
ein Steuermittel zum Steuern einer Lichtausgabe von der Leuchte (120-k) gemäß einer Beleuchtungssteuerlogik umfassend mindestens eine erste Beleuchtungssteuerregel, die das Einschalten der Lichtausgabe von der Leuchte (120-k) gemäß einem ersten Einschaltprofil als Reaktion auf ein Auftreten einer ersten Auslösebedingung definiert, die beinhaltet, dass das Belegungssensorsignal eine Änderung von einer Nichtbelegung zu einer Belegung anzeigt;
ein Kommunikationsmittel zur Drahtloskommunikation mit anderen Beleuchtungssteuereinrichtungen (110), die dazu dienen, andere Leuchten (120) zu steuern, wobei das Kommunikationsmittel ausgelegt ist zum Empfangen von Statusanzeigen von den anderen Beleuchtungssteuereinrichtungen (110); und
ein Anpassungsmittel zum Verstellen der Beleuchtungssteuerlogik während eines Betriebs der Beleuchtungssteuereinrichtung (110-k) über eine Analyse einer Vorgeschichte von von einer oder mehreren anderen Beleuchtungssteuereinrichtungen empfangenen Statusanzeigen,
**dadurch gekennzeichnet, dass** das Anpassungsmittel ausgelegt ist zum:
Speichern, in einem Speicher, der Vorgeschichte von von der einen oder mehreren anderen Beleuchtungssteuereinrichtungen empfangenen Statusanzeigen und einer Vorgeschichte von auf Basis des Lichtsensorsignals abgeleiteten Lichtniveauanzeigen,
Analysieren der gespeicherten Statusanzeigen und Lichtniveauanzeigen in einem Versuch zum Identifizieren eines wiederholt auftretenden Musters, das eine Zunahme bei einem beobachteten Lichtniveau beinhaltet, das ein oder mehrere vorbestimmte Kriterien erfüllt, und einen Empfang einer Statusanzeige, die anzeigt, dass ein Einschalten der Lichtausgabe von einer bestimmten anderen Leuchte (120-p) innerhalb eines ersten vordefinierten Zeitfensters stattfindet, und
Neuprogrammieren, als Reaktion auf das Identifizieren des wiederholt auftretenden Musters, der Beleuchtungssteuerlogik durch Einführen einer zweiten Beleuchtungssteuerregel, die ein Einschalten der Lichtausgabe von der Leuchte (120-k) gemäß einem zweiten Einschaltprofil als Reaktion auf ein Auftreten einer zweiten Auslösebedingung definiert, die das Detektieren einer Zunahme bei einem beobachteten Lichtniveau umfasst, das das eine oder die mehreren Kriterien erfüllt, und Empfangen einer Statusanzeige, die anzeigt, dass ein Einschalten der Lichtausgabe von der bestimmten anderen Leuchte (120-p) innerhalb des ersten vordefinierten Zeitfensters stattfindet, wobei das zweite Einschaltprofil von dem ersten Einschaltprofil verschieden ist.

2. Beleuchtungssteuereinrichtung (110-k) nach Anspruch 1, wobei
das erste Einschaltprofil eine erste Lichtintensitätskurve zum Verstellen der Lichtausgabe der Leuchte (120-k) von einer Standby-Lichtintensität zu einer Ziellichtintensität während einer ersten Zeitperiode definiert, wobei die erste Lichtintensitätskurve die Lichtintensität als eine Funktion der Zeit über der ersten Zeitperiode definiert, und
das zweite Einschaltprofil eine zweite Lichtintensitätskurve zum Verstellen der Lichtausgabe der Leuchte (120-k) von der Standby-Lichtintensität zu der Ziellichtintensität während einer zweiten Zeitperiode definiert, wobei die zweite Lichtintensitätskurve die Lichtintensität als eine Funktion der Zeit über der zweiten Zeitperiode definiert.

3. Beleuchtungssteuereinrichtung (110-k) nach Anspruch 2, wobei eines oder mehrere der folgenden gilt:
die zweite Zeitperiode ist von der Dauer her von der ersten Zeitperiode verschieden,
die zweite Lichtintensitätskurve weist eine andere Gestalt auf als die der ersten Lichtintensitätskurve.

4. Beleuchtungssteuereinrichtung (110-k) nach Anspruch 2 oder 3, wobei die zweite Zeitperiode länger ist als die erste Zeitperiode.

5. Beleuchtungssteuereinrichtung (110-k) nach einem der Ansprüche 2 bis 4, wobei die zweite Lichtintensitätskurve das Erreichen eines vordefinierten Zwischenlichtintensitätsniveaus zwischen der Standby-Lichtintensität und der Ziellichtintensität langsamer als durch die erste Lichtintensitätskurve definiert definiert.

6. Beleuchtungssteuereinrichtung (110-k) nach einem der Ansprüche 2 bis 4, wobei die zweite Lichtintensitätskurve das Aufrechterhalten eines vordefinierten Zwischenlichtintensitätsniveaus zwischen der Standby-Lichtintensität und der Ziellichtintensität für eine längere Zeitperiode als durch die erste Lichtintensitätskurve definiert definiert.

7. Beleuchtungssteuereinrichtung (110-k) nach einem der Ansprüche 1 bis 6, wobei das Anpassungsmittel weiter ausgelegt ist zum:
Schätzen einer Distanz zwischen der Leuchte (120-k) und der bestimmten anderen Leuchte (120-p), und
Definieren des zweiten Einschaltprofils derart, dass die Differenz zwischen dem zweiten und ersten Einschaltprofil mit zunehmender Distanz zwischen der Leuchte (120-k) und der bestimmten anderen Leuchte (120-p) zunimmt.

8. Beleuchtungssteuereinrichtung (110-k) nach Anspruch 7, wobei das Anpassungsmittel ausgelegt ist zum Schätzen der Distanz zwischen der Leuchte (120-k) und der bestimmten anderen Leuchte (120-p) auf Basis von Empfangssignalstärkeanzeigen, RSSIs, abgeleitet für von der bestimmten anderen Leuchte (120-p) empfangenen Statusnachrichten.

9. Beleuchtungssteuereinrichtung (110-k) nach Anspruch 7, wobei das Kommunikationsmittel ausgelegt ist zum Anwenden einer Drahtlosgittervernetzung und wobei das Anpassungsmittel ausgelegt ist zum Schätzen der Distanz zwischen der Leuchte (120-k) und der bestimmten anderen Leuchte (120-p) auf Basis von jeweiligen Anzahlen von Zwischenknoten zwischen der Leuchte (120-k) und der bestimmten anderen Leuchte (120-p) angezeigt für jeweilige, von der bestimmten anderen Leuchte (120-p) ankommenden jeweiligen Statusnachrichten.

10. Beleuchtungssteuereinrichtung (110-k) nach einem der Ansprüche 1 bis 9, wobei das eine oder die mehreren Kriterien eines oder mehrere der folgenden umfassen:
die Zunahme beim beobachteten Lichtniveau übersteigt einen Änderungsschwellwert,
die Zunahme beim beobachteten Lichtniveau führt zu einem Lichtniveau, das einen vordefinierten Lichtniveauschwellwert übersteigt,
die Zunahme beim beobachteten Lichtniveau erfolgt innerhalb eines zweiten vordefinierten Zeitfensters.

11. Beleuchtungssteuereinrichtung (110-k) nach einem der Ansprüche 1 bis 10, wobei ein Muster, das eine Zunahme beim beobachteten Lichtniveau und Empfangen einer Statusanzeige beinhaltet, die anzeigt, dass ein Einschalten der Lichtausgabe von einer bestimmten anderen Leuchte (120-p) innerhalb eines vordefinierten Zeitfensters stattfindet, als wiederholt auftretend als Reaktion auf einen oder beide der folgenden angesehen wird:
das Muster ist mindestens mit einer vordefinierten Häufigkeit aufgetreten,
mindestens ein vordefinierter Prozentsatz von Empfängen der Statusanzeige ist durch eine Zunahme beim beobachteten Lichtniveau innerhalb des vordefinierten Zeitfensters begleitet worden.

12. Beleuchtungssteuereinrichtung (110-k) nach einem der Ansprüche 1 bis 11, wobei
die Beleuchtungssteuerlogik eine dritte Beleuchtungssteuerregel umfasst, die das Verstellen der Lichtausgabe von der Leuchte (120-k) auf eine Standby-Lichtintensität gemäß einem ersten Ausschaltprofil als Reaktion auf ein Auftreten einer dritten Auslösebedingung definiert, die beinhaltet, dass das Belegungssensorsignal eine Änderung von Belegung zu Nichtbelegung anzeigt; und
das Anpassungsmittel ausgelegt ist zum Neuprogrammieren, als Reaktion auf das Identifizieren des wiederholt auftretenden Musters, der Beleuchtungssteuerlogik, so dass sie eine vierte Beleuchtungssteuerregel enthält, die das Verstellen der Lichtausgabe von der Leuchte (120-k) zu der Standby-Lichtintensität gemäß einem zweiten Ausschaltprofil als Reaktion auf ein Nichtauftreten der ersten Auslösebedingung innerhalb eines zweiten vordefinierten Zeitfensters nach dem Einschalten der Lichtausgabe von der Leuchte (120-k) als Reaktion auf ein Auftreten der zweiten Auslösebedingung definiert, wobei das zweite Ausschaltprofil von dem ersten Ausschaltprofil verschieden ist.

13. Beleuchtungssteuereinrichtung (110-k) nach Anspruch 12,
wobei das erste Ausschaltprofil eine dritte Lichtintensitätskurve zum Verstellen der Lichtausgabe der Leuchte (120-k) von einer Ziellichtintensität zu einer Standby-Lichtintensität während einer dritten Zeitperiode definiert, wobei die dritte Lichtintensitätskurve die Lichtintensität als eine Funktion der Zeit über der dritten Zeitperiode definiert, und
wobei das erste Ausschaltprofil eine vierte Lichtintensitätskurve zum Verstellen der Lichtausgabe der Leuchte (120-k) von der Ziellichtintensität zu der Standby-Lichtintensität während einer vierten Zeitperiode definiert, wobei die vierte Lichtintensitätskurve die Lichtintensität als eine Funktion der Zeit über der vierten Zeitperiode definiert,
wobei eines oder mehrere der folgenden gilt:
die vierte Zeitperiode ist von der Dauer her von der dritten Zeitperiode verschieden,
die vierte Lichtintensitätskurve weist eine andere Gestalt auf als die der dritten Lichtintensitätskurve.

14. Verfahren (200) zum Steuern einer Lichtausgabe von einer Leuchte (120-k) auf Basis mindestens eines Belegungssensorsignals, das einen aktuellen Belegungsstatus in einem durch die Leuchte (120-k) beleuchteten Raum anzeigt, und auf einem Lichtsensorsignal, das ein aktuell beobachtetes Lichtniveau in dem Raum anzeigt, wobei das Verfahren (200) umfasst:
Steuern (202) einer Lichtausgabe von der Leuchte (120-k) gemäß einer Beleuchtungssteuerlogik umfassend mindestens eine erste Beleuchtungssteuerregel, die das Einschalten der Lichtausgabe von der Leuchte (120-k) gemäß einem ersten Einschaltprofil als Reaktion auf ein Auftreten einer ersten Auslösebedingung definiert, die beinhaltet, dass das Belegungssensorsignal eine Änderung von einer Nichtbelegung zu einer Belegung anzeigt;
Empfangen (204) von Statusanzeigen von anderen Leuchten (120); und
Verstellen der Beleuchtungssteuerlogik während eines Betriebs der Leuchte (120-k) über eine Analyse einer Vorgeschichte von von einer oder mehreren anderen Beleuchtungssteuereinrichtungen empfangenen Statusanzeigen,
**dadurch gekennzeichnet, dass** das Verstellen umfasst:
Speichern (206), in einem Speicher, der Vorgeschichte von von der einen oder mehreren anderen Beleuchtungssteuereinrichtungen empfangenen Statusanzeigen und einer Vorgeschichte von auf Basis des Lichtsensorsignals abgeleiteten Lichtniveauanzeigen,
Analysieren (208) der gespeicherten Statusanzeigen und Lichtniveauanzeigen in einem Versuch zum Identifizieren eines wiederholt auftretenden Musters, das eine Zunahme bei einem beobachteten Lichtniveau beinhaltet, das ein oder mehrere vorbestimmte Kriterien erfüllt, und einen Empfang einer Statusanzeige, die anzeigt, dass ein Einschalten der Lichtausgabe von einer bestimmten anderen Leuchte (120-p) innerhalb eines ersten vordefinierten Zeitfensters stattfindet, und
Neuprogrammieren (210), als Reaktion auf das Identifizieren eines solchen Musters, der vorprogrammierten Beleuchtungssteuerlogik durch Einführen einer zweiten Beleuchtungssteuerregel, die ein Einschalten der Lichtausgabe von der Leuchte (120-k) gemäß einem zweiten Einschaltprofil als Reaktion auf ein Auftreten einer zweiten Auslösebedingung definiert, die das Detektieren einer Zunahme bei einem beobachteten Lichtniveau umfasst, das das eine oder die mehreren Kriterien erfüllt, und Empfangen einer Statusanzeige, die anzeigt, dass ein Einschalten der Lichtausgabe von der bestimmten anderen Leuchte (120-p) innerhalb des ersten vordefinierten Zeitfensters stattfindet, wobei das zweite Einschaltprofil von dem ersten Einschaltprofil verschieden ist.

15. Computerprogramm (317) zum Steuern einer Lichtausgabe von einer Leuchte (120-k), wobei das Computerprogramm (317) einen computerlesbaren Programmcode umfasst, der ausgelegt ist zu bewirken, dass mindestens das Verfahren nach Anspruch 14 durchgeführt wird, wenn der Programmcode auf einer oder mehreren Recheneinrichtungen (300) ausgeführt wird, die operativ an die Leuchte gekoppelt sind zum Steuern der Lichtausgabe und operativ an die anderen Leuchten gekoppelt sind zum Empfangen der Statusanzeigen.

## Revendications

1. Dispositif de commande d'éclairage (110-k) pour commander une lumière émise par un luminaire (120-k) sur la base d'au moins un signal de capteur d'occupation qui est indicatif d'un état d'occupation courant dans un espace éclairé par le luminaire (120-k) et d'un signal de capteur de lumière qui est indicatif du niveau de lumière actuellement observé dans ledit espace, le dispositif de commande d'éclairage (110-k) comprenant :
un moyen de commande pour commander la lumière émise par le luminaire (120-k) conformément à une logique de commande d'éclairage comprenant au moins une première règle de commande d'éclairage qui définit l'allumage de la lumière émise par le luminaire (120-k) conformément à un premier profil d'allumage en réponse à une occurrence d'une première condition de déclenchement qui implique le signal de capteur d'occupation indiquant un changement de non occupation à occupation ;
un moyen de communication pour une communication sans fil avec d'autres dispositifs de commande d'éclairage (110) qui servent à commander d'autres luminaires (120), le moyen de communication étant agencé pour recevoir des indications d'état provenant des autres dispositifs de commande d'éclairage (110) ; et
un moyen d'adaptation pour ajuster la logique de commande d'éclairage pendant le fonctionnement du dispositif de commande d'éclairage (110-k) par l'intermédiaire de l'analyse d'un historique d'indications d'état reçues d'un ou de plusieurs autres dispositifs de commande d'éclairage,
**caractérisé en ce que** le moyen d'adaptation est agencé pour :
stocker, dans une mémoire, l'historique des indications d'état reçues des un ou plusieurs autres dispositifs de commande d'éclairage et un historique des indications de niveau de lumière dérivées sur la base du signal du capteur de lumière,
analyser les indications d'état et les indications de niveau de lumière stockées pour tenter d'identifier un schéma se produisant de manière répétée qui implique une augmentation du niveau de lumière observé qui répond à un ou plusieurs critères prédéfinis et la réception d'une indication d'état qui indique l'allumage de la lumière émise par un autre luminaire particulier (120-p) ayant lieu dans une première fenêtre de temps prédéfinie, et
reprogrammer, en réponse à l'identification dudit schéma se produisant de manière répétée, la logique de commande d'éclairage en introduisant une deuxième règle de commande d'éclairage qui définit l'allumage de la lumière émise par le luminaire (120-k) conformément à un deuxième profil d'allumage en réponse à une occurrence d'une deuxième condition de déclenchement qui comprend la détection d'une augmentation du niveau de lumière observé qui répond auxdits un ou plusieurs critères et la réception d'une indication d'état qui indique l'allumage de la lumière émise par l'autre luminaire particulier (120-p) ayant lieu dans ladite première fenêtre de temps prédéfinie, où ledit deuxième profil d'allumage est différent dudit premier profil d'allumage.

2. Dispositif de commande d'éclairage (110-k) selon la revendication 1, dans lequel :
le premier profil d'allumage définit une première courbe d'intensité lumineuse pour ajuster l'émission de lumière du luminaire (120-k) d'une intensité lumineuse de veille à une intensité lumineuse cible pendant une première période de temps,
où la première courbe d'intensité lumineuse définit l'intensité lumineuse en fonction du temps pendant la première période de temps, et
le deuxième profil d'allumage définit une deuxième courbe d'intensité lumineuse pour ajuster l'émission de lumière du luminaire (120-k) de l'intensité lumineuse de veille à l'intensité lumineuse cible pendant une deuxième période de temps, où la deuxième courbe d'intensité lumineuse définit l'intensité lumineuse en fonction du temps pendant la deuxième période de temps.

3. Dispositif de commande d'éclairage (110-k) selon la revendication 2, dans lequel un ou plusieurs des points suivants s'appliquent :
la deuxième période de temps est de durée différente de la première période de temps,
la deuxième courbe d'intensité lumineuse a une forme différente de celle de la première courbe d'intensité lumineuse.

4. Dispositif de commande d'éclairage (110-k) selon la revendication 2 ou la revendication 3, dans lequel la deuxième période de temps est plus longue que la première période de temps.

5. Dispositif de commande d'éclairage (110-k) selon l'une quelconque des revendications 2 à 4, dans lequel la deuxième courbe d'intensité lumineuse définit d'atteindre un niveau d'intensité lumineuse intermédiaire prédéfini entre l'intensité lumineuse de veille et l'intensité lumineuse cible plus lentement que défini par la première courbe d'intensité lumineuse.

6. Dispositif de commande d'éclairage (110-k) selon l'une quelconque des revendications 2 à 4, dans lequel la deuxième courbe d'intensité lumineuse définit le maintien d'un niveau d'intensité lumineuse intermédiaire prédéfini entre l'intensité lumineuse de veille et l'intensité lumineuse cible pendant une période plus longue que celle définie par la première courbe d'intensité lumineuse.

7. Dispositif de commande d'éclairage (110-k) selon l'une quelconque des revendications 1 à 6, dans lequel le moyen d'adaptation est en outre agencé pour :
estimer une distance entre le luminaire (120-k) et l'autre luminaire particulier (120-p), et
définir le deuxième profil d'allumage de telle sorte que la différence entre les deuxième et premier profils d'allumage augmente avec l'augmentation de la distance entre le luminaire (120-k) et l'autre luminaire particulier (120-p).

8. Dispositif de commande d'éclairage (110-k) selon la revendication 7, dans lequel le moyen d'adaptation est agencé pour estimer la distance entre le luminaire (120-k) et l'autre luminaire particulier (120-p) sur la base d'indications d'intensité de signal reçues, RSSI, dérivées pour des messages d'état reçus de l'autre luminaire particulier (120-p).

9. Dispositif de commande d'éclairage (110-k) selon la revendication 7, dans lequel le moyen de communication est agencé pour appliquer un réseau maillé sans fil et où le moyen d'adaptation est agencé pour estimer la distance entre le luminaire (120-k) et l'autre luminaire particulier (120-p) sur la base des nombres respectifs de nœuds intermédiaires entre le luminaire (120-k) et l'autre luminaire particulier (120-p) indiqués pour des messages d'état respectifs provenant de l'autre luminaire particulier (120-p).

10. Dispositif de commande d'éclairage (110-k) selon l'une quelconque des revendications 1 à 9, dans lequel lesdits un ou plusieurs critères comprennent un ou plusieurs des éléments suivants :
l'augmentation du niveau de lumière observé dépasse un seuil de changement,
l'augmentation du niveau de lumière observé conduit à un niveau de lumière qui dépasse un seuil de niveau de lumière prédéfini,
l'augmentation du niveau de lumière observé se produit dans une deuxième fenêtre de temps prédéfinie.

11. Dispositif de commande d'éclairage (110-k) selon l'une quelconque des revendications 1 à 10, dans lequel un schéma qui implique une augmentation du niveau de lumière observé et la réception d'une indication d'état qui indique l'allumage de la lumière émise par un autre luminaire particulier (120-p) ayant lieu dans une fenêtre de temps prédéfinie est considéré comme un schéma se produisant de manière répétée en réponse à l'un ou aux deux éléments suivants :
ledit schéma s'est produit au moins un nombre prédéfini de fois,
au moins un pourcentage prédéfini de réceptions de ladite indication d'état ayant été accompagné d'une augmentation du niveau de lumière observé dans la fenêtre de temps prédéfinie.

12. Dispositif de commande d'éclairage (110-k) selon l'une quelconque des revendications 1 à 11, dans lequel :
la logique de commande d'éclairage comprend une troisième règle de commande d'éclairage qui définit l'ajustement de la lumière émise par le luminaire (120-k) à une intensité lumineuse de veille conformément à un premier profil d'extinction en réponse à une occurrence d'une troisième condition de déclenchement qui implique le signal du capteur d'occupation indiquant un changement d'occupation à non-occupation ; et
le moyen d'adaptation est agencé pour reprogrammer, en réponse à l'identification dudit schéma se produisant de manière répétée, la logique de commande d'éclairage pour inclure une quatrième règle de commande d'éclairage qui définit l'ajustement de la lumière émise par le luminaire (120-k) à l'intensité de lumière de veille conformément à un deuxième profil de coupure en réponse à une non-occurrence de ladite première condition de déclenchement dans une deuxième fenêtre de temps prédéfinie suivant l'allumage de la lumière émise par le luminaire (120-k) en réponse à une occurrence de ladite deuxième condition de déclenchement, où ledit deuxième profil de coupure est différent dudit premier profil de coupure.

13. Dispositif de commande d'éclairage (110-k) selon la revendication 12,
dans lequel le premier profil de coupure définit une troisième courbe d'intensité lumineuse pour ajuster la lumière émise par le luminaire (120-k) d'une intensité lumineuse cible à une intensité lumineuse de veille pendant une troisième période de temps, où la troisième courbe d'intensité lumineuse définit l'intensité lumineuse en fonction du temps sur la troisième période de temps, et
où le premier profil de coupure définit une quatrième courbe d'intensité lumineuse pour ajuster la lumière émise par le luminaire (120-k) de l'intensité lumineuse cible à l'intensité lumineuse de veille pendant une quatrième période de temps, où la quatrième courbe d'intensité lumineuse définit l'intensité lumineuse en fonction du temps pendant la quatrième période de temps,
où un ou plusieurs des points suivants s'appliquent :
la quatrième période de temps est d'une durée différente de la troisième période de temps,
la quatrième courbe d'intensité lumineuse a une forme différente de celle de la troisième courbe d'intensité lumineuse.

14. Procédé (200) de commande de la lumière émise par un luminaire (120-k) basé au moins sur un signal de capteur d'occupation qui est indicatif d'un état d'occupation courant dans un espace éclairé par le luminaire (120-k) et sur un signal de capteur de lumière qui est indicatif du niveau de lumière actuellement observé dans ledit espace, le procédé (200) comprenant les étapes suivantes :
commander (202) la lumière émise par le luminaire (120-k) conformément à une logique de commande d'éclairage comprenant au moins une première règle de commande d'éclairage qui définit l'allumage de la lumière émise par le luminaire (120-k) conformément à un premier profil d'allumage en réponse à une occurrence d'une première condition de déclenchement qui implique le signal de capteur d'occupation indiquant un changement de non-occupation à occupation ;
recevoir (204) des indications d'état provenant d'autres luminaires (120) ; et
ajuster la logique de commande d'éclairage pendant le fonctionnement du luminaire (120-k) par l'intermédiaire de l'analyse d'un historique d'indications d'état reçues d'un ou de plusieurs autres dispositifs de commande d'éclairage,
**caractérisé en ce que** ledit ajustement comprend :
le stockage (206), dans une mémoire, de l'historique des indications d'état reçues des un ou plusieurs autres dispositifs de commande d'éclairage et d'un historique des indications de niveau de lumière dérivées sur la base du signal du capteur de lumière,
analyser (208) les indications d'état et les indications de niveau de lumière stockées pour tenter d'identifier un schéma se produisant de manière répétée qui implique une augmentation du niveau de lumière observé qui répond à un ou plusieurs critères prédéfinis et la réception d'une indication d'état qui indique l'allumage de la lumière émise par un autre luminaire particulier (120-p) ayant lieu dans une première fenêtre de temps prédéfinie, et
reprogrammer (210), en réponse à l'identification d'un schéma dudit type, la logique de commande d'éclairage préprogrammée en introduisant une deuxième règle de commande d'éclairage qui définit l'allumage de la lumière émise par le luminaire (120-k) conformément à un deuxième profil d'allumage en réponse à une occurrence d'une deuxième condition de déclenchement qui comprend la détection d'une augmentation du niveau de lumière observé qui répond audit un ou plusieurs critères et la réception d'une indication d'état qui indique l'allumage de la lumière émise par l'autre luminaire particulier (120-p) ayant lieu dans ladite première fenêtre de temps prédéfinie, où ledit deuxième profil d'allumage est différent dudit premier profil d'allumage.

15. Programme informatique (317) pour commander la lumière émise par un luminaire (120-k), le programme informatique (317) comprenant un code de programme lisible par ordinateur configuré pour provoquer l'exécution d'au moins le procédé selon la revendication 14 lorsque ledit code de programme est exécuté sur un ou plusieurs appareils informatiques (300) couplés de manière opérationnelle au luminaire pour commander la lumière émise et couplés de manière opérationnelle auxdits autres luminaires pour recevoir lesdites indications d'état.
